(19) **Europäisches Patentamt**
**European Patent Office**
**Office européen des brevets**

(11) **EP 4 585 966 A1**

(12) **EUROPEAN PATENT APPLICATION**
published in accordance with Art. 153(4) EPC

(43) Date of publication:
**16.07.2025 Bulletin 2025/29**

(21) Application number: **22960330.3**

(22) Date of filing: **30.09.2022**

(51) International Patent Classification (IPC):
**G01S 13/08** (2006.01) **H04W 64/00** (2009.01)

(52) Cooperative Patent Classification (CPC):
**G01S 13/08; H04W 64/00**

(86) International application number:
**PCT/CN2022/123357**

(87) International publication number:
**WO 2024/065711 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LI, Dejian
  Shenzhen, Guangdong 518129 (CN)**
• **CHENG, Xingqing
  Shenzhen, Guangdong 518129 (CN)**
• **GAO, Lei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DISTANCE MEASUREMENT METHOD, DEVICE AND SYSTEM**

(57) A ranging method, apparatus, and system are disclosed, to implement reliable ranging. A first node measures a first ranging frame to obtain first measurement information (S202), and the first node sends second measurement information based on the first measurement information and a first feedback manner (S203). In other words, a form in which the first node feeds back measurement information needs to be determined based on a measurement result of the first node and the first feedback manner. The ranging method implements feedback of the measurement information in a ranging scenario, and improves ranging reliability and flexibility.

FIG. 2

**Description**

TECHNICAL FIELD

This application relates to the field of communication technologies, and in particular, to a ranging method, apparatus, and system.

BACKGROUND

With continuous development of global communication technologies, wireless communication technologies have surpassed wired communication technologies in a development speed and application, and present a booming development trend. Smart devices such as smart transportation devices, smart home devices, and robots are gradually entering daily life of people. Based on the wireless communication technology, the devices may perform positioning, ranging, angle measurement, sensing, or the like on a target. For example, passive entry passive start (Passive Entry Passive Start, PEPS) is an instance of in-vehicle wireless positioning application. A user can automatically lock or unlock a vehicle door by performing, by using an in-vehicle positioning system rather than a key, ranging on a vehicle key or a mobile phone carried by the user.

Therefore, how to implement reliable ranging is an urgent technical problem to be resolved.

SUMMARY

This application provides a ranging method, apparatus, and system, to implement reliable ranging.

According to a first aspect, a ranging method is provided and includes: A first node receives a first ranging frame on at least one channel, and the first node measures the first ranging frame to obtain first measurement information; and the first node sends second measurement information based on the first measurement information and a first feedback manner.

In embodiments of this application, after the first node obtains the first ranging frame through measurement to obtain the first measurement information, the first node sends the second measurement information based on the first measurement information and the first feedback manner. In other words, a specific form in which the first node feeds back measurement information needs to be determined based on a measurement result of the first node and the first feedback manner. This solution implements feedback of the measurement information in a ranging scenario, and improves ranging reliability and flexibility.

The first feedback manner may belong to a predefined or configured feedback manner set, and the feedback manner set defines a plurality of different feedback manners. In this solution, compared with a single fixed feedback manner, this feedback manner can improve ranging reliability while implementing flexible feedback of the measurement information.

In a possible design, the first ranging frame includes at least one symbol; and the first measurement information indicates channel state information of at least one valid subcarrier corresponding to the at least one symbol (or referred to as a ranging symbol). For example, the symbol is an OFDM symbol.

In this way, signal measurement is performed by using a symbol as a granularity, to improve ranging reliability.

In embodiments of this application, there are a plurality of possibilities for the first feedback manner. The following are examples of several possibilities.

    1. The first feedback manner indicates feedback of channel state information of all valid subcarriers.

In this case, the second measurement information and the first measurement information indicate the same channel state information.

The feedback manner 1 may be used to feed back detailed channel state information, and improve accuracy of a ranging frame.

2. The first feedback manner indicates feedback of channel state information of a DC subcarrier, the second measurement information includes channel state information of a DC subcarrier corresponding to the at least one symbol, and the channel state information of the DC subcarrier is determined by performing interpolation based on channel state information of valid subcarriers adjacent to the DC subcarrier.

The interpolation includes but is not limited to at least one of linear interpolation, nearest neighbor interpolation, cubic spline interpolation, and/or quadratic interpolation.

The feedback manner 2 may be used to reduce a feedback data amount on the premise of ensuring ranging reliability.

3. The first feedback manner indicates feedback of channel state information of at least one subcarrier group, the at least one valid subcarrier corresponding to the at least one symbol belongs to the at least one subcarrier group, and the second measurement information includes channel state information of each subcarrier group in the at least one subcarrier group.

The following lists several possible grouping manners.

In a possible design, every M consecutive subcarriers corresponding to the at least one symbol are one subcarrier group, and M is a positive integer. In this way, grouping intervals (namely, quantities of subcarriers included in subcarrier groups) of all subcarrier groups can be consistent.

In a possible design, every P or L consecutive subcarriers corresponding to the at least one symbol are one subcarrier group, P and L are positive integers, and P≠L. It may be understood that P and L coexist. In other words, two different grouping intervals may coexist. This can avoid a case in which some subcarriers cannot be grouped when grouping is performed only at a single grouping interval (for example, P), and ensure that all subcarriers have corresponding subcarrier groups.

In a possible design, the at least one channel includes a first channel and a second channel; and every Q consecutive subcarriers in subcarriers corresponding to the first channel are one subcarrier group, every N consecutive subcarriers in subcarriers corresponding to the second channel are one subcarrier group, Q and N are positive integers, and Q≠N. This can implement grouping at different grouping intervals on different channels, implement non-uniform grouping effect, and meet different requirements of different channels for CSI feedback precision.

Certainly, in actual application, uniform grouping may also be performed, that is, different channels correspond to a same grouping interval.

The feedback manner 3 may be used to reduce feedback data amount on the premise of ensuring ranging reliability.

In a possible design, the channel state information of each subcarrier group is an average value, a median value, a maximum value, or a minimum value of channel state information of all valid subcarriers in the subcarrier group.

In this way, only one piece of channel state information needs to be fed back for each subcarrier group, to reduce a feedback amount.

In a possible design, the channel state information of each subcarrier group is channel state information of one subcarrier in the subcarrier group, for example, channel state information of a first subcarrier, a last subcarrier, or a middle subcarrier.

This can reduce a feedback amount, have a simple implementation, be easy to implement, and have high reliability.

In a possible design, a quantity of subcarriers included in a subcarrier group is related to a ranging range. For example, a larger ranging range indicates a smaller quantity of subcarriers included in a subcarrier group; or a smaller ranging range indicates a larger quantity of subcarriers included in a subcarrier group.

In another possible design, a quantity of subcarriers included in a subcarrier group is related to an amount of data that can be fed back by the first node. For example, a larger amount of data that can be fed back by the first node indicates a smaller quantity of subcarriers included in a subcarrier group; or a smaller amount of data that can be fed back by the first node indicates a larger quantity of subcarriers included in a subcarrier group.

In embodiments of this application, the first node may start measurement from a specified position in the first ranging frame. The following describes several possible measurement designs.

In a possible design, a symbol in the first ranging frame has a CP, and that the first node measures the first ranging frame includes: The first node performs measurement starting from a first symbol in the first ranging frame.

In a possible design, a symbol in the first ranging frame does not have a CP; and that the first node measures the first ranging frame includes: The first node performs measurement starting from a second symbol in the first ranging frame.

It may be understood that, in this case, the first ranging frame does not have the CP to resist multipath interference. Therefore, the first symbol may be sacrificed to resist the multipath interference, and play a role of the CP. This improves measurement accuracy.

In a possible design, the first node performs, based on indication information or preset setting, measurement starting from a specified symbol in the first ranging frame.

Certainly, the foregoing three design manners are merely examples, but not limitations.

In a possible design, the first ranging frame includes a plurality of symbols, and that the first node measures the first ranging frame includes: The first node determines, based on channel state information corresponding to the plurality of symbols, channel state information corresponding to an $R^{th}$ symbol in the first ranging frame, where R is a positive integer, and the first measurement information indicates the channel state information corresponding to the $R^{th}$ symbol; or the first node determines, based on channel state information corresponding to the plurality of symbols, an average value of the channel state information corresponding to the plurality of symbols, where the first measurement information indicates the average value of the channel state information corresponding to the plurality of symbols.

In this way, the first node may feed back channel state information at a specified position (for example, the $R^{th}$ symbol) in the first ranging frame, to improve ranging feedback reliability.

In a possible design, the symbol in the first ranging frame uses a resource of an overhead symbol in a first-type radio frame, the first-type radio frame includes a data symbol and the overhead symbol, and the at least one channel is an initial carrier channel; or the symbol in the first ranging frame uses resources of both a data symbol and an overhead symbol in a first-type radio frame, the first-type radio frame includes the data symbol and the overhead symbol, and the at least one channel is an initial carrier channel.

For example, the first-type radio frame is a superframe or a radio frame in SLB.

This can reuse a resource of an existing radio frame for ranging, and improve resource utilization.

In a possible design, the symbol in the first ranging frame uses a data symbol in a second-type radio frame, all symbols in the second-type radio frame are data symbols, and the at least one channel is an initial carrier channel or a channel after frequency hopping.

This designs a dedicated radio frame type for ranging, and improves ranging reliability.

In a possible design, the first node sends or receives one or more types of the following information:

first indication information indicating a type of the first ranging frame;
second indication information indicating that the first ranging frame has the CP or does not have the CP;
third indication information indicating that the first ranging frame has a normal CP or an extended CP;
fourth indication information indicating that the first node feeds back channel state information of the at least one channel and/or channel number information of the at least one channel;
fifth indication information indicating a measurement start position in the first ranging frame;
sixth indication information indicating that the first node feeds back the channel state information corresponding to the $R^{th}$ symbol in the first ranging frame, where R is a positive integer;
seventh indication information indicating that the first node feeds back the average value of the channel state information corresponding to the plurality of symbols in the first ranging frame; and
eighth indication information indicating the first feedback manner in which the first node feeds back channel state information, where the first feedback manner is feeding back the channel state information of the at least one subcarrier group, or feeding back the channel state information of the DC subcarrier, or feeding back the channel state information of all the valid subcarriers.

It may be understood that when the first feedback manner is feeding back the channel state information of the at least one subcarrier group, the first node further sends or receives one or more of the following information:

ninth indication information indicating a grouping parameter of the at least one subcarrier group; and
tenth indication information indicating a calculation manner of the channel state information of the at least one subcarrier group.

In specific implementation, the first node sends or receives the one or more of the foregoing information in a ranging negotiation phase. For example, the first node is a G node, and the first node sends the one or more types of the foregoing information; or the first node is a T node, and the first node receives the one or more types of the foregoing information sent by a G node.

Certainly, the foregoing several types of indication information are merely examples rather than limitations.

In a possible design, a value of R may be preset or predefined, for example, agreed in advance by the first node and the second node, or agreed in a protocol.

In a possible design, the first node may further calibrate the first measurement information based on calibration information, to obtain calibrated first measurement information, where the calibration information is determined based on the at least one channel; and correspondingly, that the first node sends second measurement information based on the first measurement information and a first feedback manner includes: The first node sends the second measurement information based on the calibrated first measurement information and the first feedback manner.

That the calibration information is determined based on the at least one channel may be understood as that different channels may have different calibration information, or that corresponding calibration information is separately designed for channel state information of each channel for calibration.

This can improve ranging accuracy.

In a possible design, the first node may further send a second ranging frame on the at least one channel, where the second ranging frame is used by the second node to perform measurement to obtain third measurement information.

This can implement bilateral ranging interaction, and improve ranging reliability.

In a possible design, the at least one channel belongs to a first channel group, and the method further includes: The first node receives a third ranging frame on a second channel group, and the first node measures the third ranging frame to obtain fourth measurement information, where the second channel group includes one or more channels, and the second channel group has at least one channel different from the first channel group; and the first node sends fifth measurement information based on the fourth measurement information and the first feedback manner.

In other words, embodiments of this application are applied to a frequency hopping ranging scenario. The first node and the second node may sequentially perform ranging interaction on different channels (or channel groups), to improve ranging accuracy.

In a possible design, the first node sends the second measurement information and the fifth measurement information on at least one initial carrier channel.

In this way, measurement information is fed back on the initial carrier channel in a centralized manner, to improve ranging interaction efficiency and ensure reliability of a feedback process.

In a possible design, the channel state information includes a relative value of a relative reference power level RPL. In addition to sending the second measurement information, the first node may further send the RPL.

This can increase a dynamic range of the measurement information, so that a limited information bit can indicate more measurement results, improve feedback accuracy of the measurement information, and reduce a quantization error.

In a possible design, in addition to sending the second measurement information, the RPL, and the like, the first node may further send an SNR of the at least one channel.

In this way, the SNR may assist the second node in performing ranging calculation, for example, determining, based on SNRs of channels, CSI of channels is to be combined, to further improve reliability of a ranging solution.

According to a second aspect, a ranging method is provided, and includes: A second node sends on at least one channel, a first ranging frame for ranging; and the second node receives second measurement information from a first node, where the second measurement information corresponds to the first ranging frame and a first feedback manner, the second measurement information is used to determine a ranging result, and the ranging result includes a distance between the first node and the second node.

In a possible design, the first ranging frame includes at least one symbol; and the first measurement information indicates channel state information of at least one valid subcarrier corresponding to the at least one symbol.

In a possible design, the first feedback manner indicates feedback of channel state information of all valid subcarriers, and the second measurement information and the first measurement information indicate the same channel state information.

In a possible design, the first feedback manner indicates feedback of channel state information of a DC subcarrier, the second measurement information includes channel state information of a DC subcarrier corresponding to the at least one symbol, and the channel state information of the DC subcarrier is determined by performing interpolation based on channel state information of valid subcarriers adjacent to the DC subcarrier.

In a possible design, the interpolation includes at least one of linear interpolation, nearest neighbor interpolation, cubic spline interpolation, and/or quadratic interpolation.

In a possible design, the first feedback manner indicates feedback of channel state information of at least one subcarrier group, the at least one valid subcarrier corresponding to the at least one symbol belongs to the at least one subcarrier group, and the second measurement information includes channel state information of each subcarrier group in the at least one subcarrier group.

In a possible design, every M consecutive subcarriers corresponding to the at least one symbol are one subcarrier group, and M is a positive integer; or

every P or L consecutive subcarriers corresponding to the at least one symbol are one subcarrier group, P and L are positive integers, and $P \neq L$.

In a possible design, the at least one channel includes a first channel and a second channel; and every Q consecutive subcarriers in subcarriers corresponding to the first channel are one subcarrier group, every N consecutive subcarriers in subcarriers corresponding to the second channel are one subcarrier group, Q and N are positive integers, and $Q \neq N$.

In a possible design, the channel state information of each subcarrier group is an average value, a median value, a maximum value, or a minimum value of channel state information of all valid subcarriers in the subcarrier group, or channel state information of one subcarrier in the subcarrier group.

In a possible design, a quantity of subcarriers included in a subcarrier group is related to a ranging range.

In a possible design, a symbol in the first ranging frame has a CP, or a symbol in the first ranging frame does not have a CP.

In a possible design, the symbol in the first ranging frame uses a resource of an overhead symbol in a first-type radio frame, the first-type radio frame includes a data symbol and the overhead symbol, and the at least one channel is an initial carrier channel; or the symbol in the first ranging frame uses resources of both a data symbol and an overhead symbol in a first-type radio frame, the first-type radio frame includes the data symbol and the overhead symbol, and the at least one channel is an initial carrier channel; or the symbol in the first ranging frame uses a data symbol in a second-type radio frame, all symbols in the second-type radio frame are data symbols, and the at least one channel is an initial carrier channel or a channel after frequency hopping.

In a possible design, the second node sends or receives one or more of the following information:

first indication information indicating a type of the first ranging frame;

second indication information indicating that the first ranging frame has the CP or does not have the CP;

third indication information indicating that the first ranging frame has a normal CP or an extended CP;

fourth indication information indicating that the first node feeds back channel state information of the at least one channel and/or channel number information of the at least one channel;

fifth indication information indicating a measurement start position in the first ranging frame;

sixth indication information indicating that the first node feeds back the channel state information corresponding to the $R^{th}$ symbol in the first ranging frame, where R is a positive integer;

seventh indication information indicating that the first node feeds back the average value of the channel state information corresponding to the plurality of symbols in the first ranging frame; and

eighth indication information indicating the first feedback manner in which the first node feeds back channel state information, where the first feedback manner is feeding back the channel state information of the at least one subcarrier group, or feeding back the channel state information of the DC subcarrier, or feeding back the channel state information of all the valid subcarriers.

In a possible design, when the first feedback manner is feeding back the channel state information of the at least one subcarrier group, the second node further sends or receives one or more of the following information:

ninth indication information indicating a grouping parameter of the at least one subcarrier group; and

tenth indication information indicating a calculation manner of the channel state information of the at least one subcarrier group.

In a possible design, the second node further receives a second ranging frame on the at least one channel, and measures the second ranging frame to obtain third measurement information; and the second node determines a ranging result based on the second measurement information and the third measurement information, where the ranging result includes a distance between the first node and the second node.

In a possible design, the at least one channel belongs to a first channel group, and the second node may further send, on a second channel group, a third ranging frame for ranging, where the second channel group includes one or more channels, and the second channel group has at least one channel different from the first channel group; and the second node receives fifth measurement information from the first node, where the fifth measurement information corresponds to fourth measurement information and the first feedback manner.

In a possible design, the second node may further receive the second measurement information and the fifth measurement information on at least one initial carrier channel.

In a possible design, a value of R is preset or predefined.

In a possible design, the channel state information includes a relative value of a relative reference power level RPL; and the second node further receives the RPL.

In a possible design, the second node further receives an SNR of the at least one channel.

According to a third aspect, a ranging apparatus is provided, and includes a module, a unit, or a technical means configured to implement the method according to any one of the first aspect or the possible designs of the first aspect.

For example, the apparatus may include:

a receiving module, configured to receive a first ranging frame on at least one channel;

a processing module, configured to measure the first ranging frame to obtain first measurement information; and

a sending module, configured to send second measurement information based on the first measurement information and a first feedback manner.

According to a fourth aspect, a ranging apparatus is provided, and includes a module, a unit, or a technical means configured to implement the method according to any one of the second aspect or the possible designs of the second aspect.

For example, the apparatus may include:

a sending module, configured to send, on at least one channel, a first ranging frame for ranging; and

a receiving module, configured to receive second measurement information from a first node, where the second measurement information corresponds to first measurement information and a first feedback manner, the second measurement information is used to determine a ranging result, and the ranging result includes a distance between the first node and a node on which the apparatus is located.

According to a fifth aspect, a ranging apparatus is provided, and includes at least one processor and an interface circuit. The interface circuit is configured to: receive a signal from an apparatus other than the apparatus, and send the signal to the processor, or receive a signal from the processor, and send the signal to an apparatus other than the apparatus; and the processor is configured to implement, through a logic circuit or by executing a code instruction, the method according to any one of the first aspect or the possible designs of the first aspect, or the method according to any one of the second aspect or the possible designs of the second aspect.

According to a sixth aspect, a computer-readable storage medium is provided. The storage medium stores a computer program or instructions. When the computer program or the instructions are executed by a communication apparatus, the method according to any one of the first aspect or the possible designs of the first aspect is implemented, or the method according to any one of the second aspect or the possible designs of the second aspect is implemented.

According to a seventh aspect, a computer program product is provided. The computer program product stores instructions. When the instructions are run on a computer, the computer is enabled to perform the method according to any one of the first aspect or the possible designs of the first aspect, or perform the method according to any one of the second aspect or the possible designs of the second aspect.

According to an eighth aspect, a ranging system is provided, and includes:

a first node, configured to perform the method according to any one of the first aspect or the possible designs of the first aspect; and
a second node, configured to perform the method according to any one of the second aspect or the possible designs of the second aspect.

According to a ninth aspect, a computer program product is provided. The computer program product stores instructions. When the instructions are run on a computer, the computer is enabled to perform the method according to any one of the first aspect or the possible designs of the first aspect, or the computer is enabled to perform the method according to any one of the second aspect or the possible designs of the second aspect.

For technical effect of the second aspect to the ninth aspect, refer to technical effect that can be achieved by corresponding designs in the first aspect. Details are not described herein again.

BRIEF DESCRIPTION OF DRAWINGS

FIG. 1 is a diagram of a possible application scenario according to an embodiment of this application;
FIG. 2 is a flowchart diagram of a ranging method according to an embodiment of this application;
FIG. 3 is a diagram of a superframe;
FIG. 4 is a diagram of a ranging frame from a G node and a ranging frame from a T node according to an embodiment of this application;
FIG. 5 is a diagram of a ranging frame from a G node according to an embodiment of this application;
FIG. 6 is a diagram of a ranging frame according to an embodiment of this application;
FIG. 7 is a diagram of a ranging frame according to an embodiment of this application;
FIG. 8 is a diagram in which a measurement start symbol is a first symbol in a ranging frame;
FIG. 9 is a diagram in which a first node feeds back channel state information corresponding to a first symbol in a ranging frame;
FIG. 10 is a diagram in which a first node feeds back channel state information corresponding to a second symbol in a ranging frame;
FIG. 11 is a diagram of frequency hopping ranging;
FIG. 12 is a diagram of a ranging apparatus according to an embodiment of this application; and
FIG. 13 is a diagram of another ranging apparatus according to an embodiment of this application.

DESCRIPTION OF EMBODIMENTS

Technical solutions provided in embodiments of this application are applied to various wireless communication scenarios, for example, an in-vehicle positioning, ranging, angle measurement, or sensing scenario, an indoor positioning, ranging, angle measurement, or sensing scenario, or another wide-area wireless communication scenario or a local area wireless communication scenario. This is not limited in this application. A specific wireless communication technology includes but is not limited to SparkLink (SparkLink), Wireless Fidelity (Wi-Fi), Bluetooth, Bluetooth low energy (BLE), or ultra-wideband (Ultra Wide Band, UWB).

It may be understood that in embodiments of this application, similar steps are performed to implement positioning, ranging, angle measurement, sensing, and the like. Therefore, any one of the terms may be used to represent "positioning", "ranging", "angle measurement", "sensing", and the like.

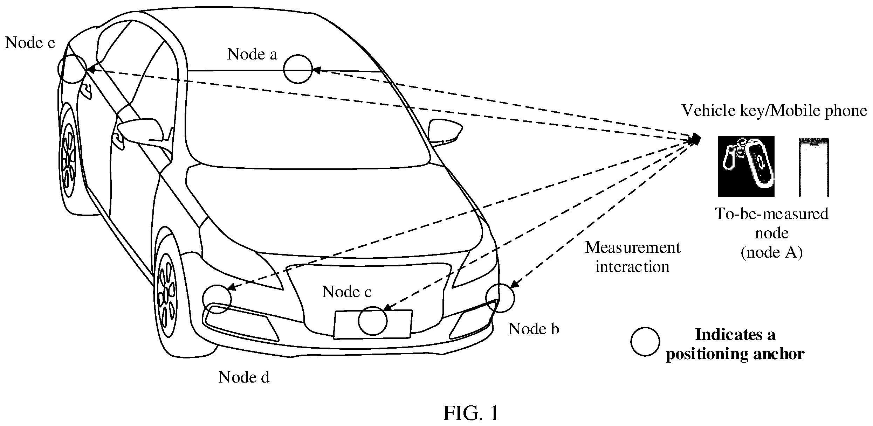

FIG. 1 is a diagram of a possible application scenario according to an embodiment of this application. In an in-vehicle positioning scenario, positioning anchors (or referred to as positioning stations, position anchors, anchors, beacons, or measurement nodes), for example, nodes b, c, d, and e, are deployed at four vehicle corners outside a vehicle. At least one positioning anchor, for example, a node a, is deployed in the vehicle (for example, an in-vehicle rear-view mirror or inside a top of the vehicle). A vehicle key is a to-be-positioned target (namely, a to-be-positioned device, or a to-be-measured device or label), for example, a node A. A specific implementation of the vehicle key may be a conventional vehicle key having a positioning function, or may be a mobile phone or a wearable device having a positioning function. The positioning anchor and/or the vehicle key may send and/or receive a ranging signal, and measure the received ranging signal to obtain a corresponding measurement quantity. Position information (for example, a distance relative to the vehicle) of the vehicle key may be obtained by calculating the measurement quantity obtained by the positioning anchor and/or the vehicle key.

In a wireless communication scenario, a plurality of communication domains may be included in a specific communication area or range. A communication domain is a system formed by a group of communication nodes having a communication relationship and a communication connection relationship (namely, a communication link) between the communication nodes. One communication domain includes one primary communication node (which may be referred to as a primary node or a G node for short) and at least one secondary communication node (which may be referred to as a secondary node or a T node for short). The primary node is also referred to as a grant node, is responsible for managing a time-frequency resource in the communication domain, and has a function of scheduling a resource for communication or positioning between the communication nodes in the communication domain. A communication link from the G node to the T node is referred to as a G link or a downlink, and a communication link from the T node to the G node is referred to as a T link or an uplink.

The scenario shown in FIG. 1 is used as an example. The positioning anchors, the vehicle key, and the like may form one communication domain. The vehicle key may be a primary node (a G node), and the positioning anchors are secondary nodes (T nodes); or one positioning anchor is a primary node, and other positioning anchors and the vehicle key are secondary nodes. This is not limited in this application. For ease of description, the following uses the G node and the T node as an example for description. However, a node type is not limited in this application.

It may be understood that the scenario shown in FIG. 1 is merely an example. In actual application, embodiments of this application are further applied to another wireless communication scenario.

In a wireless communication system based on orthogonal frequency division multiplexing (Orthogonal Frequency Division Multiplexing, OFDM) signals, a frequency hopping ranging technology is used (that is, ranging parties can perform ranging interaction on a plurality of different channels). Measurement results of the plurality of channels may be combined, so that a measurement bandwidth exceeds a bandwidth of a single OFDM signal. This obtains a higher ranging resolution, has smaller multipath interference in multipath-rich environments, such as an indoor or underground parking lot, and a factory, and finally obtains higher ranging accuracy.

In the SparkLink basic (SparkLink Basic, SLB) version standard, an OFDM signal is used as a communication signal. In an SLB-based OFDM frequency hopping ranging system, one of a pair of ranging nodes needs to feed back measurement information (such as frequency domain channel state information (Channel-State Information, CSI)) for a measurement result of a ranging frame (or referred to as a measurement frame) received by the node. The ranging frame includes at least one ranging symbol (for example, an OFDM symbol) for ranging. For example, in the scenario shown in FIG. 1, the vehicle key may receive a ranging frame, measures the received ranging frame to obtain corresponding measurement information, and needs to feed back the measurement information to the positioning anchor.

There are some CSI feedback solutions in a Wi-Fi system. However, these solutions are oriented to transmit precoding in a closed-loop multiple-input multiple-output (multiple-input multiple-output, MIMO) system. For example, a receiving end feeds back a transmit precoding matrix V to a transmitting end, without single-antenna signaling. In addition, fed-back CSI information cannot be for bidirectional ranging in frequency hopping ranging (for example, CSI cannot correspond to a frequency hopping channel). Therefore, the solutions are not applicable to measurement information feedback in the foregoing ranging scenario.

In view of this, the technical solutions of this application are provided.

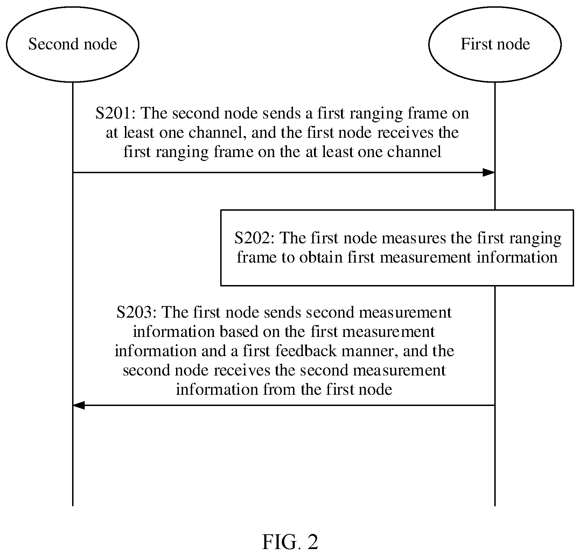

FIG. 2 is a flowchart diagram of a ranging method according to an embodiment of this application. The method includes the following steps.

S201: A second node sends a first ranging frame on at least one channel, and a first node receives the first ranging frame on the at least one channel.

The first node is a G node, the second node is a T node, and correspondingly, the first ranging frame is a ranging frame from the T node. Alternatively, the first node is a T node, the second node is a G node, and correspondingly, the first ranging frame is a ranging frame from the G node.

In a possible design, the first ranging frame includes at least one symbol, and the symbol may be for ranging, angle measurement, or sensing. For example, in SLB, a ranging symbol on a G link (namely, a G node link) and a ranging symbol on a T link (namely, a T node link) are a CSI reference signal (CSI-RS) and a sounding reference signal (SRS) respectively. It may be understood that each symbol in the first ranging frame includes information of all subcarriers on the at least one channel. A symbol in the first ranging frame may also be referred to as a ranging symbol, a measurement symbol, or the like, and may be used to implement ranging, angle measurement, sensing, or the like.

Optionally, the symbol is an OFDM symbol. For example, in the SLB, in an 80 MHz OFDM symbol having four 20 MHz carriers, each carrier may be for channel measurement of a 20 MHz carrier channel, and each carrier has 38 valid subcarriers and one direct current (DC) subcarrier. Therefore, the 80 MHz OFDM signal may be used to simultaneously measure four 20 MHz carrier channels, where the four carrier channels form a channel group.

The following describes a structure of the first ranging frame.

In a possible design, the symbol in the first ranging frame uses a resource of an overhead symbol in a first-type radio frame. In other words, the second node sends the symbol in the first ranging frame by using a resource of an overhead symbol in a first-type radio frame, and the first node receives the symbol in the first ranging frame by using the resource of the overhead symbol in the first-type radio frame. The first-type radio frame includes a data symbol and the overhead symbol. The resource is a time-frequency resource occupied for symbol transmission.

For example, the first-type radio frame may be a radio frame in the SLB standard. The SLB standard defines a transmission frame structure of a superframe: A periodicity of the superframe is 1 ms, each superframe includes 48 radio frames, and each radio frame includes several downlink OFDM symbols (or G link data symbols), uplink OFDM symbols (or T link data symbols), overhead symbols, and uplink/downlink switching gaps (GAPs).

A G link data symbol is for G link data transmission, and a T link data symbol is for T link data transmission. When transmission directions are not distinguished, the G link data symbol and the T link data symbol are collectively referred to as data symbols. Data transmission includes data information transmission (including user data or higher layer signaling transmission) and another part of physical layer signal transmission (for example, a second-type data information demodulation reference signal).

A G link system overhead symbol is for G link system overhead transmission, and a T link system overhead symbol is for T link system overhead transmission. When transmission directions are not distinguished, the G link system overhead symbol and the T link system overhead symbol are collectively referred to as system overhead symbols. For example, a synchronization signal belongs to an overhead symbol.

The overhead symbol may be used by a node to perform one or more of synchronization, channel sounding, downlink control information (DCI) transmission, and the like. Overhead symbols are embedded within each radio frame. There may be one or two available overhead symbols in each radio frame. Correspondingly, there are a maximum of 96 overhead symbols in one superframe (SF).

When the transmission directions are distinguished, the overhead symbols are classified into two types: an overhead symbol for the G link system overhead transmission is referred to as the G link system overhead symbol (SG for short), and an overhead symbol for the T link system overhead transmission is referred to as the T link system overhead symbol (ST for short). When the transmission directions are not distinguished, the G link system overhead symbol and the T link system overhead symbol are collectively referred to as the system overhead symbols.

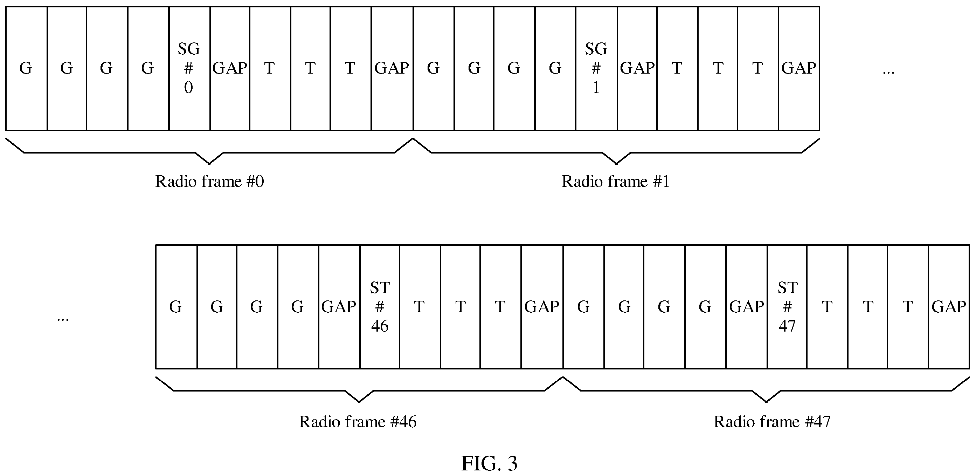

FIG. 3 is a diagram of a superframe. The superframe includes 48 radio frames numbered from 0 to 47, where an SG represents a G link system overhead symbol, an ST represents a resource of a T link system overhead symbol, G represents a resource of a G link data symbol, and T represents a resource of a T link data symbol. In FIG. 3, each radio frame includes one SG symbol or one ST symbol, and the 48 radio frames in the superframe include 48 overhead symbols in total.

In periodic superframe transmission, nodes G and T use reference signals such as a first training signal (First Training Signal, FTS) and a second training signal (Second Training Signal, STS) to perform timing and frequency synchronization in the front part of a first superframe. A synchronization signal may be inserted in each superframe to maintain timing and frequency synchronization. Therefore, an overhead symbol in a subsequent superframe may be for transmission of a ranging symbol.

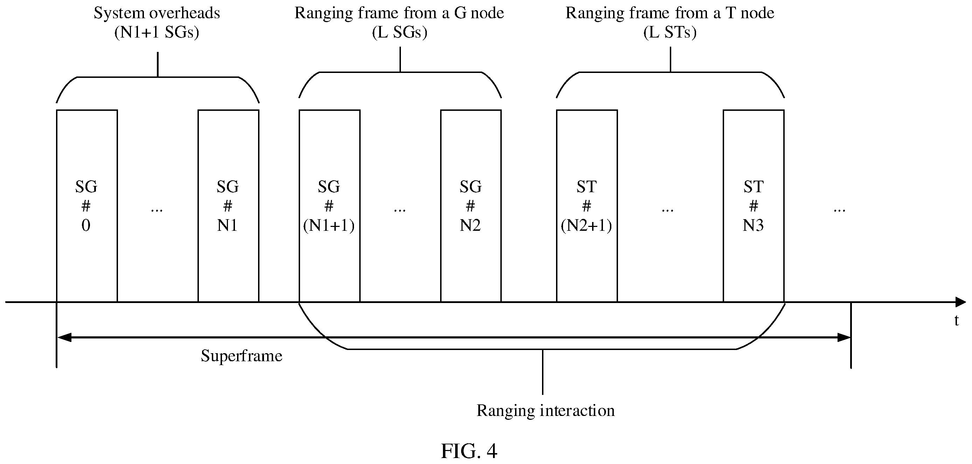

For example, FIG. 4 is a diagram of a ranging frame of a G node and a ranging frame of a T node when each radio frame includes one SG or ST symbol. When each radio frame includes one SG symbol or one ST symbol, one ranging frame may include L overhead symbols, where the ranging frame of the G node includes L SG symbols, and the ranging frame of a T node includes L ST symbols. It may be understood that one ranging interaction process includes a ranging frame of at least one G node and a ranging frame of at least one T node.

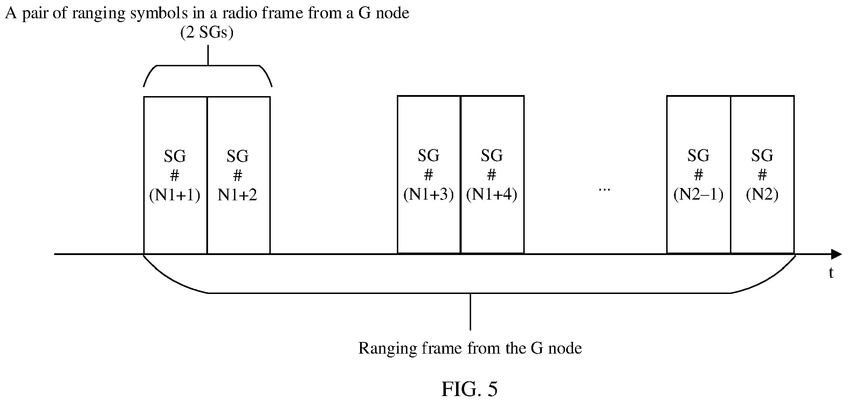

For example, FIG. 5 is a diagram of a ranging frame of a G node when each radio frame includes two SG or ST symbols.

Certainly, FIG. 4 and FIG. 5 show merely examples. In actual application, the ranging frame may alternatively be in another form.

It may be understood that in the foregoing design, the at least one channel is an initial carrier channel (or an initial carrier channel group) of the first node and the second node. The initial carrier channel (or the initial carrier channel group) represents an operating carrier channel (or an operating carrier channel group) after the G node or the T node completes association, namely, a carrier channel (or an operating carrier channel group) on which ranging negotiation is performed.

It may be understood that, before performing ranging interaction, the G node and the T node need to perform the association first. A specific operation process includes: The G node sends an association request to the T node, and the T node returns an association response to the G node; or the T node sends an association request to the G node, and the G node returns an association response to the T node. When the G node and the T node have no security context, the association request may be specifically an "associationRequestNonSec (associationRequestNonSec)" message, and the association response may be an "AssociationSetupNonSec (AssociationSetupNonSec)" message; or when the G node and the T node have security contexts, the association request may be an "associationRequestWithSec (associationRequestWithSec)" message, and the association response may be an "AssociationSetupWithSec (AssociationSetupWithSec)" message.

Optionally, the initial carrier channel is a channel (or channel group) with a highest frequency in all available channels (or available channel groups) of the first node and the second node.

On the initial carrier channel, the symbol in the ranging frame uses the resource of the overhead symbol in the defined radio frame. This can improve resource utilization, do not affect communication between the G node and the T node, and have strong backward compatibility.

In another possible design, the symbol in the first ranging frame uses a resource of a data symbol in a second-type radio frame. In other words, the second node sends the symbol in the first ranging frame by using a resource of a data symbol in a second-type radio frame, and the first node receives the symbol in the first ranging frame by using the resource of the data symbol in the second-type radio frame. All symbols in the second-type radio frame are data symbols, and the at least one channel is an initial carrier channel or a channel after frequency hopping.

It may be understood that the second-type radio frame is different from the first-type radio frame, and the symbols in the second-type radio frame are configured as all T data symbols or configured as all G data symbols. There may be no SG symbol, ST symbol, or gap in the second-type radio frame, and an uplink/downlink switching gap is implemented between radio frame intervals of the G node and the T node.

In specific implementation, all the symbols in the second-type radio frame may be for ranging. Therefore, a structure of the ranging frame may be consistent with that of the second-type radio frame. To be specific, all symbols in the ranging frame use resources of all the symbols in the second-type radio frame. In other words, the ranging frame is the second-type radio frame, that is, all the symbols in the second-type radio frame form the ranging frame. Therefore, in this design, the second-type radio frame and the ranging frame may be replaced with each other.

In addition to a channel state information reference signal (Channel-State Information-Reference Signal, CSI-RS) and a sounding reference signal (Sounding Reference Signal, SRS), an OFDM symbol in the second-type radio frame may further use an FTS or an STS. When a sending node (for example, the second node) of a pair of ranging nodes sends any one of the foregoing ranging symbols, because a reference signal known to a receiving node is sent, the receiving node may perform demodulation or channel estimation on the reference signal, to obtain CSI. At the receiving node (for example, the first node), a channel frequency response value (a complex value, IQ value for short) of a corresponding frequency corresponding to a subcarrier corresponding to an OFDM symbol (or referred to as a reference signal) for sounding channel is referred to as frequency domain CSI of the sounding channel.

The second-type radio frame supports a cyclic prefix (Cyclic Prefix, CP) or no CP. For example, when a symbol type is specifically a CSI-RS or an SRS symbol, the symbol may have or not have a CP. For example, when a symbol type is specifically an FTS or STS symbol in SLB, the symbol does not have a CP. When a plurality of OFDM symbols (for example, FTS or STS symbols) that do not have a CP are continuously sent, because there is a natural cyclic shift characteristic between adjacent symbols, a previous symbol may be used as a cyclic prefix of a next symbol. Because duration of one OFDM symbol is far longer than duration of one CP, a capability of accommodating a multipath delay spread becomes stronger, and a requirement for time synchronization between transceiver nodes is relaxed. This can reduce overheads for time synchronization before the ranging frame.

Further, when the second-type radio frame has the CP, the CP may be classified into a normal CP and an extended CP. The extended CP is used in a scenario in which a ranging range is large. When the G node and the T node measure a plurality of carrier channels through frequency hopping, CP configurations on all the carrier channels are the same.

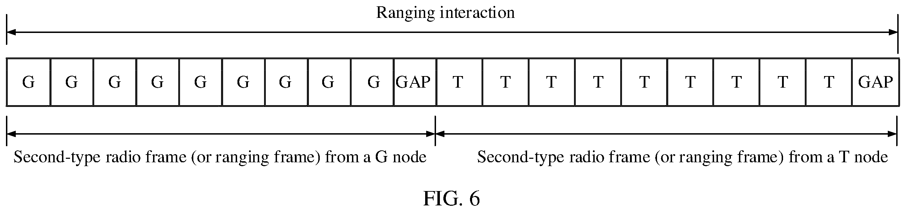

A gap between a second-type radio frame of the G node and a second-type radio frame of the T node may occupy a last OFDM symbol in a first-sent second-type radio frame, as shown in FIG. 6. Alternatively, each second-type radio frame can accommodate 10 OFDM symbols that do not have a CP, and a gap appears between two second-type radio frames (that is, a GAP does not occupy time in the second-type radio frame). When a CP-OFDM symbol (namely, an OFDM symbol that has a CP) is used as a ranging symbol, each radio frame may use a same manner as an existing radio frame structure in the SLB, that is, one radio frame has eight normal CP-OFDM symbols or seven extended CP-OFDM symbols.

It may be understood that the second-type radio frame provided in the foregoing design is not a defined radio frame for communication between the G and the T nodes, and therefore is applicable to all channels. In other words, the at least one channel may be an initial carrier channel (or an initial carrier channel group) of the first node and the second node, or may be a channel after frequency hopping.

This design defines a new radio frame structure for transmission of a ranging symbol, without affecting transmission of an original radio frame.

In another possible design, the symbol in the first ranging frame uses resources of both a data symbol and an overhead symbol in a first-type radio frame, and the first-type radio frame includes the data symbol and the overhead symbol. In other words, the second node sends the symbol in the first ranging frame by using resources of the data symbol and the overhead symbol in the first-type radio frame, and the first node receives the symbol in the first ranging frame by using the resources of the data symbol and the overhead symbol in the first-type radio frame. For a structure of the first-type radio frame, refer to related descriptions in FIG. 3. Details are not described herein again.

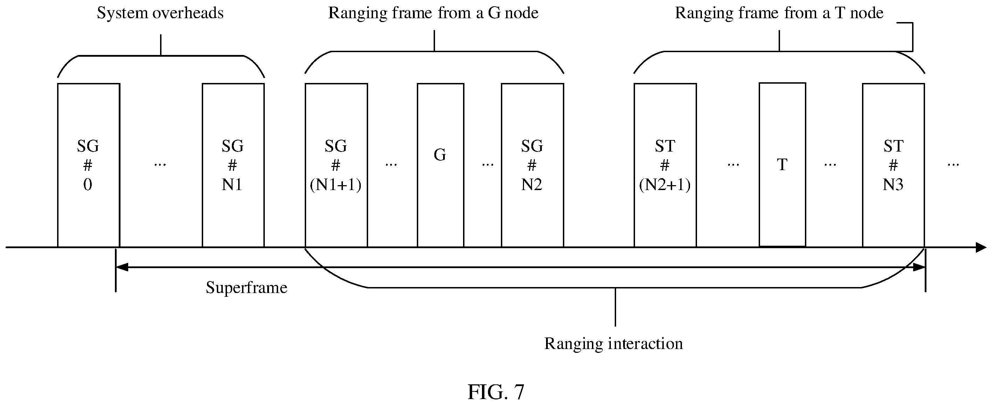

It can be learned from the foregoing descriptions that, in periodically transmitted superframes, except the first superframe, the overhead symbol in the subsequent superframe may be for transmission of the ranging symbol. If the G and T nodes have a remaining resource, of a data symbol in the subsequent superframe, for communication, the remaining resource of the data symbol may also be for transmission of the ranging symbol. For example, FIG. 7 is a diagram of a possible ranging frame. A resource, of a data symbol, for transmission of a ranging symbol may be agreed on by the G node and the T node in a ranging negotiation phase, and/or indicated by using preamble information sent before the ranging frame.

It may be understood that in the foregoing design, the at least one channel is an initial carrier channel (or an initial carrier channel group) of the first node and the second node.

On the initial carrier channel, the ranging symbol in the ranging frame is sent by using the resources of the overhead symbol and the data symbol in the defined radio frame. This can improve resource utilization, without affecting communication between the G node and the T node, perform a ranging and positioning function and a communication function in parallel, and have strong backward compatibility.

The foregoing describes several possible types of the first ranging frame. In actual application, before transmitting the first ranging frame, the first node and the second node need to determine a type of the first ranging frame.

In a possible design, the first node and the second node may determine the type of the first ranging frame in the ranging negotiation phase. For example, the G node of the first node and the second node configures the type of the first ranging frame, and sends first indication information indicating the type of the first ranging frame.

Specifically, if the first node is the G node, the first node sends the first indication information, and the second node receives the first indication information; or if the first node is the T node, the second node sends the first indication information, and the first node receives the first indication information.

Optionally, the first indication information may be included in a first message for sending in the ranging negotiation phase, so that after receiving the first indication information, the node receiving the first message can determine the type of the ranging frame that needs to be exchanged with the node sending the first message, to prepare for sending or receiving the ranging frame in advance.

For example, the ranging frame shown in FIG. 4 is defined as a type 1, the ranging frame shown in FIG. 5 is defined as a type 2, the ranging frame shown in FIG. 6 is defined as a type 3, and the ranging frame shown in FIG. 7 is defined as a type 4. In this case, the first node may send or receive the first indication information, where the first indication information indicates any one of the type 1, the type 2, the type 3, and the type 4.

In addition to indicating the type of the ranging frame in the ranging negotiation phase, the G node may further indicate the type of the ranging frame by using radio frame structure information in the preamble information sent before the ranging frame. For example, the preamble information sent by the G node indicates a specific number of a radio frame structure, so as to determine a structure of the ranging frame.

For example, the following Table 1 show examples of radio frame structures in various G-link symbol and T-link symbol ratios configured based on an extended CP. The radio frame structures 0 to 11 indicate that a radio frame has a G link ranging symbol and a T link ranging symbol, and the radio frame structures 12 and 13 indicate that a radio frame has only a G link ranging symbol or a T link ranging symbol, and may be for transmission of a ranging frame type 3. A radio frame structure configured based on a normal cyclic prefix is similar to that in Table 1, except that a resource of a radio frame having eight OFDM symbols is used to carry a G link ranging symbol and a T link ranging symbol.

Table 1 Radio frame structures configured based on an extended cyclic prefix

| Radio frame structure | Symbol configuration | | | | | | |
|---|---|---|---|---|---|---|---|
| | 0 | 1 | 2 | 3 | 4 | 5 | 6 |
| 0 | G | T | T | T | T | T | T |
| 1 | G | G | T | T | T | T | T |
| 2 | G | G | G | T | T | T | T |

(continued)

| Radio frame structure | Symbol configuration | | | | | | |
|---|---|---|---|---|---|---|---|
| | 0 | 1 | 2 | 3 | 4 | 5 | 6 |
| 3 | G | G | G | G | T | T | T |
| 4 | G | G | G | G | G | T | T |
| 5 | G | G | G | G | G | G | T |
| 6 | T | G | G | G | G | G | G |
| 7 | T | T | G | G | G | G | G |
| 8 | T | T | T | G | G | G | G |
| 9 | T | T | T | T | G | G | G |
| 10 | T | T | T | T | T | G | G |
| 11 | T | T | T | T | T | T | G |
| 12 | G | G | G | G | G | G | G |
| 13 | T | T | T | T | T | T | T |

Further, before transmitting the first ranging frame, the first node and the second node further need to determine whether the first ranging frame has the CP.

In a possible design, the first node and the second node may determine, in the ranging negotiation phase, whether the first ranging frame has the CP. For example, the G node of the first node and the second node configures that the first ranging frame has the CP or does not have the CP, and sends second indication information indicating that the first ranging frame has the CP or does not have the CP.

It may be understood that in actual application, the first indication information and the second indication information may be same indication information, that is, one piece of indication information may indicate both the frame type and whether the CP exists. For example, the first indication information indicates that the frame type is the ranging frame (type 1) shown in FIG. 4, and the ranging frame of this type does not have the CP. Therefore, no additional indication information may be used to indicate whether the CP exists.

Certainly, the first indication information and the second indication information may alternatively be different indication information. For example, the first indication information indicates that the frame type is the ranging frame (type 2) shown in FIG. 5, and the ranging frame of this type may have the CP or may not have the CP. Therefore, a piece of second indication information may be additionally configured to indicate whether the first ranging frame has the CP.

Optionally, both the first indication information and the second indication information are carried in the first message. This can reduce resource overheads.

Further, when the first ranging frame has the CP, before transmitting the first ranging frame, the first node and the second node further need to determine whether the CP of the first ranging frame is a normal CP or an extended CP.

In a possible design, the first node and the second node may determine, in the ranging negotiation phase, that the first ranging frame has the normal CP or the extended CP. For example, the G node of the first node and the second node configures that the first ranging frame has or does not have the normal CP or the extended CP, and sends third indication information indicating that the first ranging frame has the normal CP or the extended CP.

Optionally, the third indication information may also be carried in the first message. This can further reduce resource overheads.

S202: The first node measures the first ranging frame to obtain first measurement information.

In an example, when an OFDM symbol is used as a ranging symbol, an OFDM signal whose valid bandwidth is approximately 20 MHz may be referred to as a carrier (a channel for sending a carrier OFDM signal is referred to as a carrier channel), and a center frequency (namely, a direct current subcarrier) of the 20 MHz OFDM signal is referred to as a carrier frequency. That is, one carrier includes 39 consecutive subcarriers, and the 39 subcarriers are sequentially numbered #0, #1, ..., and #38 in ascending order of corresponding frequencies. The subcarrier #19 is the direct current (DC) subcarrier, and other 38 subcarriers except the DC subcarrier are referred to as valid subcarriers. The G node and the T node may operate on a plurality of carrier channels, and the plurality of carrier channels form one carrier channel group (corresponding to one channel group). For ease of description, a carrier channel is referred to as a channel for short in embodiments of this application.

It should be understood that, when measuring the first ranging frame, the first node actually measures each valid subcarrier. Therefore, the first measurement information obtained through measurement may indicate channel state information of a frequency corresponding to at least one valid subcarrier of at least one symbol corresponding to the first ranging frame.

For ease of description, in this specification, "channel state information of a frequency corresponding to a subcarrier" may also be referred to as "channel state information of a subcarrier".

In addition, the "channel state information" in this specification may also be referred to as "CSI", "CSI information", "CSI feedback information", "feedback information", or the like.

In specific implementation, after performing a fast Fourier transform (fast Fourier transform, FFT) operation on received data in time domain, a receiver of the first node performs demodulation and/or channel estimation on a known modulation sequence of a CSI-RS, an SRS, and the like, to obtain a channel frequency response value (or referred to as a channel estimation value) of each valid subcarrier, which may be represented by a complex value (such as an I value and a Q value, IQ value for short), and these IQ values may be referred to as frequency domain channel state information (namely, frequency domain CSI). Because the frequency domain channel state information is mainly discussed in this specification, the frequency domain channel state information may be referred to as channel state information (CSI) for short below.

In a possible design, in the ranging negotiation phase, the first node and the second node further determine, after performing measurement (that is, determine that the measurement is frequency-domain CSI measurement), to feed back channel state information of the at least one channel. For example, the G node (the first node or the second node) further sends fourth indication information indicating that the first node feeds back the channel state information of the at least one channel and/or channel number information of the at least one channel. Optionally, in a frequency hopping ranging scenario, the fourth indication information may further indicate a carrier channel number and/or a subcarrier number corresponding to the fed-back channel state information. The carrier channel number represents a channel number of a carrier (for example, a 20 MHz carrier), so that after frequency hopping measurement of a plurality of channels is completed, channel state information corresponding to the plurality of channels can be fed back together, the channel state information can correspond to the channels to which the channel state information belongs based on the channel number, and the channel state information of the plurality of channels is combined in frequency hopping ranging signal processing.

It can be learned from the foregoing description that the first ranging frame may have one ranging frame symbol, or may have a plurality of ranging symbols. Therefore, when the first ranging frame has the plurality of ranging frame symbols, before measuring the first ranging frame, the first node needs to determine to-be-measured symbols or a symbol from which measurement starts.

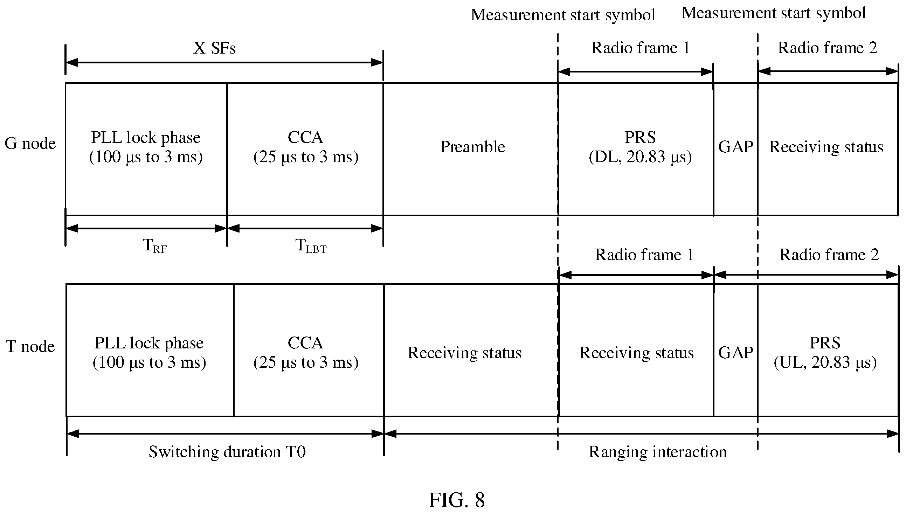

In a possible design, the symbol in the first ranging frame has the CP, and the first node may perform measurement starting from a first symbol in the first ranging frame. For example, FIG. 8 is a diagram in which a measurement start symbol is a first symbol. Channel state information corresponding to a radio frame 1 and a radio frame 2 is channel state information corresponding to the first symbol.

In another possible design, the symbol in the first ranging frame does not have the CP, and the first node may perform measurement starting from a second symbol in the first ranging frame. It may be understood that, the first ranging frame does not have the CP to resist multipath interference. Therefore, a first symbol may be sacrificed to resist the multipath interference, and play a role of the CP. This improves measurement accuracy.

In another possible design, the first node performs, based on indication information, preset setting, a preset agreement, or the like, measurement starting from a specified symbol in the first ranging frame.

For example, the first node and the second node may configure a measurement start position (or a measurement start symbol) in the ranging negotiation phase. For example, the G node of the first node and the second node sends fifth indication information indicating the measurement start position (namely, the symbol from which measurement starts, for example, an $R^{th}$ symbol, where R is a positive integer and is a fixed value) in the first ranging frame.

For example, a protocol specifies or the first node and the second node agree on the measurement start position in the first ranging frame (namely, the symbol from which measurement starts, for example, an $R^{th}$ symbol, where R is a positive integer, and is a fixed value once agreed on).

Further, when measuring the plurality of symbols in the first ranging frame, the first node needs to determine channel state information, corresponding to symbols, fed back by the first node.

In a possible design, when the first ranging frame includes the plurality of symbols, the first node determines, based on channel state information corresponding to the plurality of symbols, channel state information corresponding to an $R^{th}$ symbol in the first ranging frame, where R is a positive integer, and the first measurement information indicates the channel state information corresponding to the $R^{th}$ symbol.

That the first node determines, based on the channel state information corresponding to the plurality of symbols, the channel state information corresponding to the $R^{th}$ symbol in the first ranging frame may be understood as: When the first node measures the plurality of symbols in the first ranging frame, and feeds back the channel state information corresponding to the $R^{th}$ symbol in the first ranging frame, channel state information corresponding to another symbol in the first ranging frame other than the $R^{th}$ symbol may be converted into the channel state information corresponding to the $R^{th}$ symbol, or channel state information corresponding to another symbol in the first ranging frame other than the $R^{th}$

symbol may be used to assist in estimating the channel state information corresponding to the $R^{th}$ symbol. For example, when the channel state information corresponding to the $R^{th}$ symbol is determined, the channel state information corresponding to the $R^{th}$ symbol is converted, based on information such as CSI, symbol duration, and a carrier frequency offset (Carrier Frequency Offset, CFO) that are obtained through calculation of at least one symbol after the $R^{th}$ symbol, into estimated CSI corresponding to the $R^{th}$ symbol, and the CSI obtained through measurement of the $R^{th}$ symbol is corrected. This can improve a signal-to-noise ratio and accuracy of the CSI corresponding to the $R^{th}$ symbol.

Through indicating or pre-agreeing, one node (for example, the first node) of the ranging parties feeds back the CSI corresponding to the $R^{th}$ symbol, and the other node (for example, the second node) in frequency hopping ranging may combine, when combining CSI of the two nodes, CSI corresponding to symbols with a same resource sequence number (for example, combine the CSI corresponding to the $R^{th}$ symbol in the first ranging frame and CSI corresponding to an $R^{th}$ symbol in a second ranging frame, where the second ranging frame is a ranging frame that is sent by the first node and that is used by the second node for measurement).

A resource sequence number indicates a position of a symbol in a ranging frame. For example, if the ranging frame includes N symbols, resource sequence numbers of the N symbols may indicate a sequence in which the N symbols appear in time domain, and indicate a symbol in the ranging frame. For example, a resource sequence number of a first symbol may be 0, a resource sequence number of a second symbol may be 1, ..., and a resource sequence number of an $N^{th}$ symbol may be N-1. Certainly, this is merely an example rather than a limitation.

This can avoid CSI corresponding to symbols with different resource sequence numbers from being combined during frequency hopping ranging.

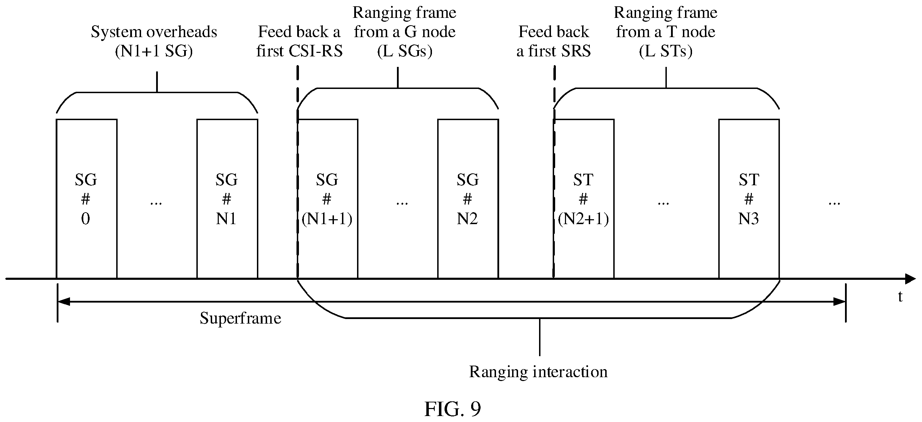

In an example, when the symbol in the first ranging frame has the CP, the first node feeds back channel state information corresponding to the first symbol, that is, the first measurement information indicates channel state information corresponding to the first symbol, as shown in FIG. 9.

A measurement result of another symbol in the frame should be converted to a measurement result of the first symbol. For example, when frequency domain CSI of an OFDM subcarrier is measured, due to a residual carrier frequency offset (CFO), phases of same subcarriers in a first symbol and a second symbol are different. Therefore, a position of a measurement symbol should be specified, and a phase of another symbol is aligned and estimated based on occurrence time of the first symbol, so that channel state information corresponding to another symbol in the radio frame other than the first symbol is converted to the first ranging symbol, and the channel state information of the first symbol is corrected. Finally, the channel state information corresponding to the first symbol is fed back.

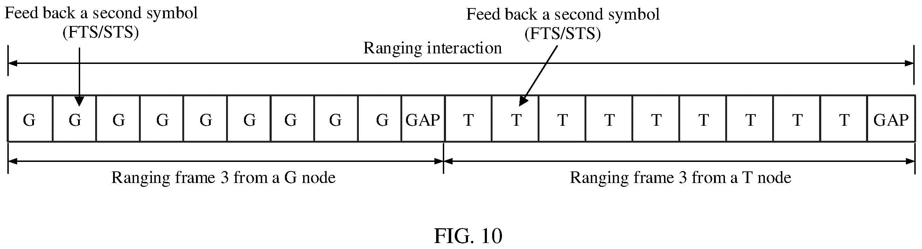

In an example, when the symbol in the first ranging frame does not have the CP, the first node feeds back channel state information corresponding to the second symbol, that is, the first measurement information indicates channel state information corresponding to the second symbol, as shown in FIG. 10.

Certainly, the foregoing two cases are merely examples. In actual application, R may alternatively be another value. This is not limited in this application.

In another possible design, when the first ranging frame includes the plurality of symbols, the first node determines, based on the channel state information corresponding to the plurality of symbols, statistical values, such as a maximum value, a minimum value, or an average value, of the channel state information corresponding to the plurality of symbols, and the first measurement information indicates the statistical values of the channel state information corresponding to the plurality of symbols.

To ensure that measurement interaction between the first node and the second node is successful, before transmitting the first ranging frame, the first node and the second node further need to determine the channel state information, corresponding to the symbols, fed back by the first node.

For example, in the ranging negotiation phase or when the preamble information is sent, the G node (the first node or the second node) sends seventh indication information indicating that the first node feeds back the average value of the channel state information corresponding to the plurality of symbols in the first ranging frame. This can obtain, through sending the average value of the channel state information corresponding to the plurality of symbols, channel state information with a high SNR in a simple processing manner, and avoid combining CSI corresponding to symbols with different resource sequence numbers. For example, in the ranging negotiation phase or when the preamble information is sent, the G node (the first node or the second node) sends sixth indication information indicating that the first node feeds back channel state information corresponding to an $R^{th}$ symbol in the first ranging frame, or the like. This can feed back, through sending the channel state information corresponding to the $R^{th}$ symbol, channel state information corresponding to a specified symbol, and avoid a non-coherent combination gain caused by combining CSI corresponding to different resource sequence numbers.

During frequency hopping ranging, after the G node sends the sixth indication information or the seventh indication information, the first node may maintain a same feedback manner on each channel (group) in frequency hopping. This can coherently combine CSI on different channels, and obtain a high bandwidth gain of frequency hopping ranging.

S203: The first node sends second measurement information based on the first measurement information and a first feedback manner, and the second node receives the second measurement information from the first node.

In an optional implementation, after obtaining the first measurement information, the first node may further calibrate the first measurement information, to eliminate a non-ideal characteristic that is introduced by a radio frequency transceiver channel and an antenna and that is included in the first measurement information, so that the first node sends the second measurement information based on calibrated first measurement information and the first feedback manner.

For example, the first node calibrates the first measurement information based on calibration information, to obtain the calibrated first measurement information, where the calibration information is determined based on the at least one channel.

That the calibration information is determined based on the at least one channel may be understood as that, for channel state information of a channel, calibration needs to be performed based on calibration information corresponding to the channel, and different channels may correspond to different calibration information.

For example, an IQ value of a single subcarrier may be defined as an IQ value of a subcarrier at which the $R^{th}$ symbol in the first ranging frame reaches an antenna connection port (antenna connector) of the first node. During implementation, loopback measurement results of different frequency bands or channels, and/or baseband processing delays need to be calibrated at a baseband for the IQ value, of the subcarrier, obtained by estimating an original received signal, so as to obtain the IQ value of the subcarrier at the antenna connection port (antenna connector).

This can improve accuracy of channel state information, and improve ranging accuracy.

In this embodiment of this application, the first node obtains the first measurement information through measurement. However, a form of measurement information finally fed back by the first node (whether to directly feed back the first measurement information or feed back first measurement information after further processing the first measurement information) needs to be determined based on the first feedback manner.

The first feedback manner may belong to a predefined or configured feedback manner set, and the feedback manner set defines a plurality of different feedback manners.

The following lists several possible feedback manners.

1. The first feedback manner indicates feedback of channel state information of all valid subcarriers. In this case, the second measurement information and the first measurement information indicate same channel state information. In other words, the second measurement information also indicates channel state information of at least one valid subcarrier corresponding to the at least one symbol in the first ranging frame.

For example, when a quantity of the at least one channel is one, the first measurement information may indicate channel state information of 38 valid subcarriers on the channel, and the second measurement information also indicates the channel state information of the 38 valid subcarriers on the channel.

For example, when the at least one channel is a plurality of channels, the first measurement information may indicate channel state information of 38 valid subcarriers on each of the plurality of channels, and the second measurement information also indicates the channel state information of 38 valid subcarriers on each of the plurality of channels.

In specific implementation, the second measurement information may be carried in a CSI report message. For example, Table 2 shows an example of a CSI report message corresponding to a 20 MHz carrier in a first feedback manner.

It may be understood that when a ranging frame is carried on a plurality of 20 MHz carriers, CSI feedback of each 20 MHz is shown in Table 2. For three non-valid subcarriers that are used as a spacing between adjacent 20 MHz carriers, CSI cannot be measured because there is no modulation signal. This may not be used as a part of the CSI for feedback, and reduce a CSI feedback data amount.

Table 2 CSI report message (20 MHz carrier)

| | Field | Size | Meaning |
|---|---|---|---|
| Channel number | CSI of a subcarrier #0 | 12 bits (I values)+12 bits (Q values) | CSI value corresponding to the subcarrier numbered 0 |
| | CSI of a subcarrier #1 | 12 bits (I values)+12 bits (Q values) | CSI value corresponding to the subcarrier numbered 1 |
| | ... | ... | ... |
| | CSI of a subcarrier #18 | ... | CSI value corresponding to the subcarrier numbered 18 |
| | CSI of a subcarrier #20 | ... | CSI value corresponding to the subcarrier numbered 20 |
| | ... | ... | ... |
| | CSI of a subcarrier #38 | ... | CSI value corresponding to the subcarrier numbered 38 |

In frequency hopping ranging, in the CSI report message shown in Table 2, a carrier channel number (Channel Number) and/or a subcarrier number corresponding to the fed-back CSI should be indicated based on the fourth indication information. The channel number herein may be a channel number corresponding to a carrier, that is, indicate a channel corresponding to the reported CSI (the CSI values corresponding to the subcarriers 0# to 38#).

2. The first feedback manner indicates feedback of channel state information of a DC subcarrier. In this case, the second measurement information and the first measurement information indicate different channel state information, and the second measurement information is determined based on the first measurement information. The second measurement information includes channel state information of a DC subcarrier corresponding to the at least one symbol, and the channel state information of the DC subcarrier is determined by performing interpolation based on channel state information of valid subcarriers adjacent to the DC subcarrier. The interpolation includes at least one of linear interpolation, nearest neighbor interpolation, cubic spline (cubic spline) interpolation, and/or quadratic interpolation (Quadratic interpolation). This is not limited in this application.

It can be learned from the foregoing description that each channel includes 38 valid subcarriers and one DC subcarrier. Therefore, when the at least one channel is the plurality of channels, the second measurement information includes channel state information of DC subcarriers on the plurality of channels. Channel state information of each DC subcarrier is determined by performing interpolation based on channel state information of another valid subcarrier on the channel to which the DC subcarrier belongs.

For example, on a 2.4 GHz channel, a DC subcarrier spacing is 5 MHz, and a non-ambiguity distance (namely, a maximum ranging range) is 60 m. For example, on a 2.4 GHz & 5 GHz channel, a minimum DC subcarrier spacing is 5 MHz, and a non-ambiguity distance is also 60 m. It can be learned that, when the DC subcarrier spacing is 5 MHz, a 60 m ranging range can be supported in a manner of feeding back channel state information of the DC subcarrier. This meets most short-range ranging scenarios.

3. The first feedback manner indicates group feedback, that is, the first feedback manner indicates feedback of channel state information of at least one subcarrier group, the at least one valid subcarrier corresponding to the at least one symbol belongs to the at least one subcarrier group, and the second measurement information includes channel state information of each subcarrier group in the at least one subcarrier group. In this case, the second measurement information and the first measurement information indicate different channel state information, and the second measurement information is determined based on the first measurement information.

It may be understood that, in a text, a quantity of subcarriers included in a subcarrier group may also be referred to as a subcarrier grouping interval, a subcarrier group spacing, or the like. The grouping interval may indicate a grouping manner, for example, a quantity of subcarriers that form a subcarrier group.

During grouping, only valid subcarriers may be grouped, or both valid subcarriers and DC subcarriers may be grouped. In other words, a subcarrier group may include only valid subcarriers, or may include both valid subcarriers and DC subcarriers. This is not limited in this application. After the valid subcarriers are grouped, CSI of only one subcarrier may be fed back in each subcarrier group. This can reduce a fed-back CSI data amount (namely, a data amount of the second measurement information).

The following lists several possible grouping manners.

Manner 1: Every M consecutive subcarriers corresponding to the at least one symbol are one subcarrier group, and M is a positive integer.

For example, for any one of the at least one channel, every three consecutive subcarriers of 39 subcarriers on the channel may be grouped into one group, and 13 subcarrier groups are obtained in total. Certainly, this is merely an example rather than a limitation.

This grouping manner is simple and easy to implement.

Manner 2: Every P or L consecutive subcarriers corresponding to the at least one symbol are one subcarrier group, P and L are positive integers, and P≠L.

It should be noted that the subcarrier group including the P subcarriers and the subcarrier group including the L subcarriers herein coexist, that is, two different grouping intervals may exist at the same time.

For example, for any one of the at least one channel (corresponding to a bandwidth of 20 MHz), every four or three consecutive subcarriers of 39 subcarriers on the channel may form one subcarrier group, and 12 groups are obtained, where a quantity of subcarriers in three groups is 4, and a quantity of subcarriers in the other nine groups is 3. Certainly, this is merely an example rather than a limitation.

This grouping manner can ensure that all subcarriers can be grouped into a subcarrier group, and improve reliability of a solution.

Optionally, a difference between P and L is 1 or 2.

For example, for subcarriers on a channel, some subcarriers are grouped by using every P consecutive subcarriers as one subcarrier group, and the other subcarriers are grouped by using every L consecutive subcarriers as one subcarrier group, where L=P-2, and the subcarrier group in which a quantity of subcarriers is L includes a DC subcarrier. An advantage of doing this is that valid subcarriers on two sides of the DC subcarrier appear in pairs. For example, subcarriers #0, #16, and #18 and subcarriers #38, #22, and #20 are respectively used as pairs of subcarriers, and the subcarriers that appear in pairs are selected to facilitate interpolation on a blank DC subcarrier and a blank subcarrier between adjacent 20 MHz carriers. As shown in Table 3, when P=4, L=2 is set at a position including a DC subcarrier #19, and subcarriers #18 and #20 are selected, so that all selected subcarriers are symmetric subcarriers relative to the DC subcarrier. The symmetric subcarriers are selected to help a processing algorithm eliminate impact of a DC and improve accuracy of CSI of a combined multi-channel.

In a specific example, when P=4 and L=3, it indicates that every four consecutive (P) or three (L) consecutive subcarriers in one carrier form one subcarrier group of a first granularity.

Table 3 shows an example of a CSI report message when subcarrier grouping corresponds to 2 (P=L=2), subcarrier grouping corresponds to 4 (P=4, L=3), and subcarrier grouping corresponds to 8 (P=8, L=6) in a first feedback manner. In this case, one subcarrier is specified in each subcarrier group as a representative of the subcarrier group for feedback. L is used to describe an exception caused because subcarriers cannot be uniformly grouped near the DC subcarrier. Therefore, a subcarrier grouping parameter may be represented by only P, and L may not be displayed.

Table 3 CSI report message obtained when subcarrier grouping is performed (per 20 MHz carrier)

| Field | Field | Subcarrier number |
|---|---|---|
| P=L=2 | Channel number | #0, #2, #4, #6, #8, #10, #12, #14, #16, #18, #20, #22, #24, #26, #28, #30, #32, #34, #36, #38 |
| P=4, and L=2 | Channel number | #0, #4, #8, #12, #16, #18, #20, #22, #26, #30, #34, #38 |
| P=8, and L=6 | Channel number | #0, #8, #16, #22, #30, #38 |

In this embodiment of this application, when the at least one channel is the plurality of channels, grouping intervals (or subcarrier group spacings, equal to a quantity P of subcarriers included in a subcarrier group) of subcarriers corresponding to all the channels may be the same (that is, uniformly grouped), or may be different (that is, non-uniformly grouped). This is not limited in this application.

For example, the at least one channel includes a first channel and a second channel; and every Q consecutive subcarriers in subcarriers corresponding to the first channel are one subcarrier group, every N consecutive subcarriers in subcarriers corresponding to the second channel are one subcarrier group, Q and N are positive integers, and Q≠N.

When the G node configures a parameter fed back by using CSI, a uniform grouping mode or a non-uniform grouping mode should be indicated in CSI configuration information. When the uniform grouping mode is indicated, subcarrier grouping parameters of all measured channels are P. When the non-uniform grouping mode is used, different P values indicate grouping parameters of the channels. For example, when a total of four channels (for example, frequency hopping measurement) are measured, four different P values may be configured.

Channel 1: P=1 (indicating that a subcarrier grouping interval on the channel 1 is 1, namely, full feedback)
Channel 2: P=1 (indicating that a subcarrier grouping interval on the channel 2 is 1, namely, full feedback)
Channel 3: P=2 (indicating that a subcarrier grouping interval on the channel 3 is 2, that is, a grouping parameter P=2)

Channel 4: P=4 (indicating that a subcarrier grouping interval on the channel 3 is 2, that is, a grouping parameter P=4)

In the foregoing Manner 1 or Manner 2, channel state information of each subcarrier group may be a statistical value (for example, an average value, a median value, a maximum value, or a minimum value) of channel state information of all valid subcarriers in the subcarrier group. This can reduce a feedback amount.

In the foregoing Manner 1 or Manner 2, channel state information of each subcarrier group may alternative be channel state information of one subcarrier in the subcarrier group, for example, channel state information of a first subcarrier, a last subcarrier, or a middle subcarrier. This can reduce a feedback amount, have a simple implementation, be easy to implement, and have high reliability.

In the foregoing Manner 1 and Manner 2, all subcarriers are grouped. In actual application, only some subcarriers may be selected for grouping. For example,

in Manner 3, G subcarriers are used as a comb to divide subcarrier groups. Specifically, a valid subcarrier selected from every G consecutive subcarriers is used as a subcarrier group separately, that is, each subcarrier group includes only one subcarrier.

For example, 39 subcarriers on one channel may form eight subcarrier groups by using five subcarriers as a comb, and subcarriers included in each subcarrier group are subcarriers #0, #5, #10, #15, #20, #25, #30 and #35 in sequence.

In Manner 3, channel state information of each subcarrier group is channel state information of the subcarrier included in the subcarrier group.

It may be understood that, in the foregoing Manner 1 and Manner 2, if the channel state information of each subcarrier group is channel state information of one valid subcarrier in the subcarrier group, feedback effect finally achieved in Manner 1 and Manner 2 is similar to feedback effect in Manner 3, that is, the channel state information of each subcarrier group is essentially channel state information of one valid subcarrier.

In this embodiment of this application, before transmitting the first ranging frame, the first node and the second node further need to determine the first feedback manner in which the first node feeds back channel state information.

In a possible design, the first node and the second node may determine, in the ranging negotiation phase, the first feedback manner in which the first node feeds back the channel state information. For example, the G node of the first node and the second node determines the first feedback manner, and sends eighth indication information indicating the first feedback manner in which the first node feeds back the channel state information, where the first feedback manner is feeding back the channel state information of the at least one subcarrier group, or feeding back the channel state information of the DC subcarrier, or feeding back the channel state information of all the valid subcarriers.

Further, when the first feedback manner is feeding back the channel state information of the at least one subcarrier group, the first node and the second node further need to determine a grouping parameter of the at least one subcarrier group, a calculation manner of the channel state information of the at least one subcarrier group, and the like.

The grouping parameter indicates a manner of dividing subcarrier groups. For example, the grouping parameter may indicate that the grouping manner is Manner 1, Manner 2, Manner 3, or the like. Optionally, the grouping parameter further indicates a specific grouping interval (namely, a quantity of subcarriers included in a subcarrier group) in the corresponding grouping manner, for example, M or P and L in the foregoing description. Optionally, the grouping parameter may further indicate whether different channels are uniformly grouped or non-uniformly grouped. When the different channels are non-uniformly grouped, the grouping parameter may indicate grouping intervals of the different channels, for example, values of Q and N in the foregoing example. Certainly, the foregoing is merely some examples of the grouping parameter. In actual application, any parameter indicating the grouping manner may belong to the grouping parameter.

The calculation manner indicates a manner of determining channel state information of a subcarrier group. For example, channel state information of each subcarrier group is an average value of channel state information of all valid subcarriers in the subcarrier group, or channel state information of each subcarrier group is channel state information of one subcarrier in the subcarrier group.

In a possible design, the first node and the second node may determine, in the ranging negotiation phase, the grouping parameter of the at least one subcarrier group, the calculation manner of the channel state information of the at least one subcarrier group, and the like.

For example, the G node of the first node and the second node determines the grouping parameter of the at least one subcarrier group and the calculation manner of the channel state information of the at least one subcarrier group, and sends ninth indication information and tenth indication information respectively indicating the grouping parameter of the at least one subcarrier group and the calculation manner of the channel state information of the at least one subcarrier group.

Optionally, the ninth indication information and/or the tenth indication information and the foregoing eighth indication information may be carried in a same message, for example, a second message. This can reduce resource overheads. The second message may be the same as or different from the first message. This is not limited in this application.

In a specific implementation process, a quantity of subcarriers included in a subcarrier group may be related to a ranging range. For example, a larger ranging range is expected to indicate a smaller quantity of subcarriers included in a subcarrier group; or a smaller ranging range is expected to indicate a larger quantity of subcarriers included in a subcarrier group.

For example, if $D_{max}$ represents a maximum ranging range, and $B_{SC}$ represents a quantity of subcarriers included in a subcarrier group, the following relationship is met:

$$D_{max} = c/2B_{SC},$$

where

a value of c is a speed of light $3 \times 10^8$ m/s. For example, when $B_{SC}$ = 480 kHz, a corresponding maximum ranging range is 312.5 m; or when $B_{SC}$ = 480×4 kHz, a corresponding maximum ranging range is 78.125 m.

In actual application, for a positioning application that does not require a large ranging range, a corresponding subcarrier group spacing may be increased. This reduces a feedback data amount, and reduces feedback overheads and power consumption.

In a specific implementation process, a quantity of subcarriers included in a subcarrier group may alternatively be related to a feedback capability of the first node, for example, an amount of data that can be fed back. For example, a smaller amount of data that can be fed back by the first node indicates more subcarrier data included in a subcarrier group; or a larger amount of data that can be fed back by the first node indicates less subcarrier data included in a subcarrier group.

In an optional implementation, a reference power level RPL (Reference Power Level) may be used as a reference value, and to-be-fed-back channel state information, such as an IQ value, is represented as a relative value relative to the RPL.

For example,

$$IQ[dBm] = 20 \log_{10} \left( abs \left( \frac{IQ[linear]}{1024} \right) \right) + RPL[dBm],$$

where

IQ[linear] represents a relative value (not a dB value) relative to RPL[dBm], RPL[dBm] represents a relative reference value used by a measured value IQ[dBm] , and IQ[dBm] represents the actual measured value of a sampling point. The reference value RPL is set to help increase a dynamic range of CSI feedback information, so that a limited information bit can indicate more CSI, improve accuracy of measurement information feedback, and reduce a quantization error. According to the foregoing formula, a sending device of the CSI information may obtain, through calculation, based on IQ[linear] and the RPL [dBm] obtained through measurement, to-be-fed-back IQ[dBm], and the denominator 1024 in the foregoing formula may be replaced with another value.

In specific implementation, for one or more carrier channels, only one reference value RPL[dBm] may be fed back, to reduce an amount of data for feeding back the CSI information; or one reference value is fed back for every C carrier channels, where C is a positive integer; or one reference value is fed back for every S subcarriers, where S is a positive integer. Optionally, for a carrier channel, the reference value RPL[dBm] needs to be fed back together with the CSI information (for example, the CSI information shown in Table 2 or Table 3). The reference value RPL is set to help increase the dynamic range of the CSI feedback information, so that the limited information bit can indicate more CSI, improve accuracy of measurement information feedback, and reduce the quantization error.

When a frequency hopping frequency bandwidth range is large, different RPL values may be fed back on different channels. For example, an RPL 1 is fed back on a channel 1, and an RPL 2 is fed back on a channel 2. The different RPL values are set based on an average power of received symbols on the different channels. This can overcome frequency selectivity when the frequency hopping frequency bandwidth range is large and provide more accurate CSI quantized values.

An example of an amount of data to be fed back is as follows: For one 80 MHz OFDM signal measurement, the amount of data to be fed back is 38*4*12*2=3648 bits; or for three 80 MHz OFDM signal measurements, the amount of data to be fed back is 38*4*12*2*3=10944 bits. It can be seen that, even for frequency hopping of 80 MHz OFDM, the amount of data to be fed back does not exceed 11 kbits. It can be learned that, the foregoing manner can effectively reduce the data feedback amount, so that the first node completes transmission of the CSI feedback information in short time.

The foregoing steps S201 to S203 provide a solution of how the first node feeds back measurement information when the first node and the second node perform ranging interaction. To be specific, after obtaining the first measurement information by measuring the first ranging frame, the first node sends the second measurement information to the second node based on the first measurement information and the first feedback manner. This can improve ranging reliability. In addition, the foregoing solution provides a plurality of feedback manners. The first node may flexibly select any feedback manner for feedback. Compared with a single fixed feedback manner, this feedback manner can implement flexible feedback of the measurement information.

It may be understood that in this embodiment of this application, when the first node is the T node, the CSI information of the first node is fed back in two feedback types: A feedback type 1 is CSI information measured for the G node, and a feedback type 2 is CSI information measured for the T node. The foregoing two types of CSI feedback procedures are described as follows.

Feedback type 1: In the SLB, because the initial carrier channel supports only a G link symbol and a T link symbol that carry CSI feedback information, the T node participating in frequency hopping ranging needs to feed back the CSI information to the G node. If a measured node or a positioned node is the G node, the G node performs combination processing on CSI information based on CSI information of at least one T node measured by the G node and CSI information received from the at least one T node, to obtain a ranging result. The ranging result includes a distance between the first node and the second node.

Feedback type 2: In the SLB, if the G node and a T2 node are positioning anchors, and a T1 node is a measured target node (measured node), the T1 node first sends measured CSI information (represented as T2-T1) of the T2 node to the G node, and then the G node sends the received CSI information T2-T1 to the T2 node, so that the T2 node can perform combination processing on measure CSI information (T1-T2) of the T1 node, and the CSI information (T2-T1) received from G node, to obtain a distance between the T1 node and the T2 node.

This helps reduce a time interval between ranging interaction on different channels, reduces total duration of channel frequency hopping measurement, helps cope with a dynamic channel change during ranging of a moving target, and improves ranging accuracy.

In a possible design, after step S203, the second node may obtain a ranging result based on the second measurement information. The ranging result includes a distance between the first node and the second node.

For example, ranging interaction between the first node and the second node is bilateral ranging interaction. To be specific, the first node measures a ranging frame (namely, the first ranging frame) sent by the second node, and the second node also measures a ranging frame (for example, a second ranging frame) sent by the first node. Correspondingly, the second node receives the second ranging frame on the at least one channel, and measures the second ranging frame to obtain third measurement information; and the second node determines a ranging result based on the second measurement information and the third measurement information. The ranging result includes a distance between the first node and the second node.

In a possible design, the first node and the second node may perform frequency hopping ranging.

For example, the at least one channel belongs to a first channel group, and before step S201 or after step S203, the method may further include:

The second node sends a third ranging frame on a second channel group, and the first node receives the third ranging frame on the second channel group; the first node measures the third ranging frame to obtain fourth measurement information; and the first node sends fifth measurement information based on the fourth measurement information and the first feedback manner. The second channel group includes one or more channels, and the second channel group has at least one channel different from the first channel group.

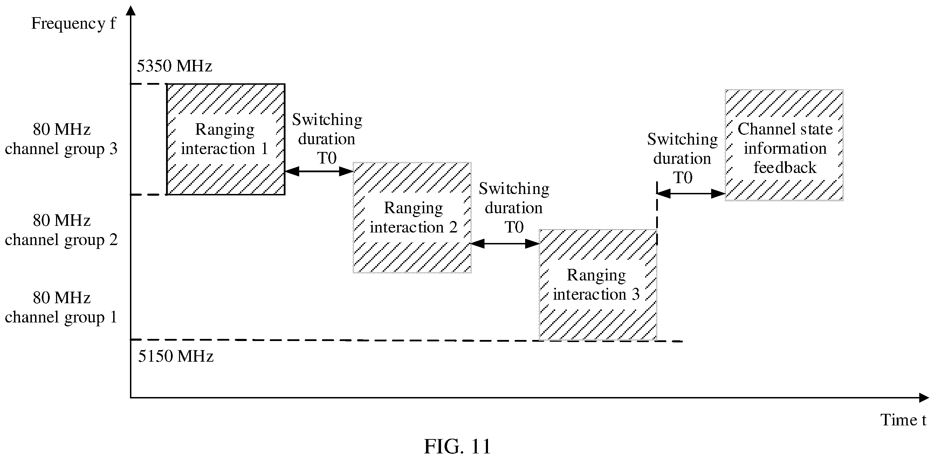

For example, FIG. 11 shows an example of frequency hopping ranging. The first node and the second node may separately perform ranging interaction on channel groups 1, 2, and 3. S201 to S203 may be ranging interaction on any one of the channel groups 1, 2, and 3.

Frequency hopping ranging can implement technical effect of large-bandwidth signal measurement through combination, and improve a ranging resolution and ranging accuracy.

In a possible design, after measuring the first ranging frame, in addition to feeding back the CSI information (that is, sending the second measurement information) and the RPL, the first node may further feed back an SNR of the at least one channel together. The SNR may be SNRs corresponding to one or more carrier channels, or an average SNR corresponding to one carrier channel group. This is not limited in this application. A unit of the SNR is dB.

In this way, the second node may use the SNR to indicate signal quality of the fed-back CSI information, so as to perform ranging calculation on the CSI information based on the signal quality of the CSI information, for example, combine CSI information of channels with a high SNR, thereby improving ranging accuracy. In addition, when the SNR is insufficient to indicate the signal quality, the signal quality of the CSI information may be indicated in a manner of signal quality rating or scoring.

In a possible design, the first node may feed back measurement information (for example, the second measurement information and the fifth measurement information in the foregoing) on the at least one initial carrier channel. For example, as shown in FIG. 11, the initial carrier channel of the first node and the second node is a channel group 3. After completing three times of ranging interaction, the first node and the second node return to the channel group 3 to perform centralized feedback of the channel state information.

It may be understood that implementations in this specification may be implemented separately, or may be implemented in combination with each other.

Based on a same technical concept, an embodiment of this application provides a ranging apparatus. The apparatus includes a module, unit, or means configured to perform the method performed by the first node or the second node in the foregoing method embodiment. The module or unit or means may be implemented by software, or may be implemented by hardware, or may be implemented by hardware by executing corresponding software.

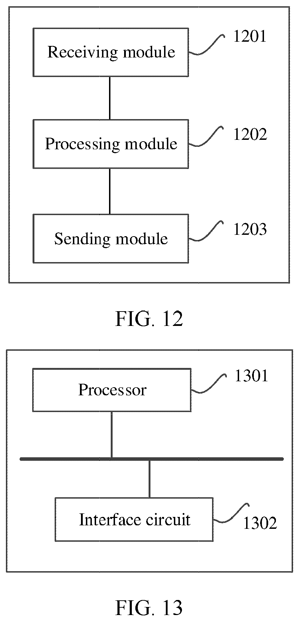

For example, refer to FIG. 12, the apparatus may include a receiving module 1201, a processing module 1202, and a sending module 1203.

When the apparatus is located on the first node, the receiving module 1201 is configured to receive a first ranging frame on at least one channel; the processing module 1202 is configured to measure the first ranging frame to obtain first measurement information; and the sending module 1203 is configured to send second measurement information based on the first measurement information and a first feedback manner.

When the apparatus is located on the first node, the sending module 1203 is configured to send a first ranging frame on at least one channel, where the first ranging frame is used by a first node to perform measurement to obtain first measurement information; and the receiving module 1201 is configured to receive second measurement information from the first node, where the second measurement information is determined based on the first measurement information and a first feedback manner.

It should be understood that all related content of the steps in the foregoing method embodiment may be cited in function descriptions of corresponding functional modules. Details are not described herein again.

In specific implementation, the apparatus may have a plurality of product forms. The following describes several possible product forms.

Refer to FIG. 13. An embodiment of this application further provides a ranging apparatus. The apparatus includes at least one processor 1301 and an interface circuit 1302. The interface circuit 1302 is configured to receive a signal from an apparatus other than the apparatus, and send the signal to the processor 1301, or receive a signal from the processor 1301, and send the signal to a communication apparatus other than the apparatus; and the processor 1301 is configured to implement, through a logic circuit or executing a code instruction, the method performed by the first device or the second device.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, RAMs in many forms may be available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be noted that the memory described in this specification aims to include but is not limited to these memories and any memory of another appropriate type.

Based on a same technical concept, an embodiment of this application further provides a computer-readable storage medium, including a program or instructions. When the program or the instructions are run on a computer, the method performed by the first node or the second node is performed.

Based on a same technical concept, an embodiment of this application further provides a computer program product including instructions. The computer program product stores the instructions. When the instructions are run on a computer, the method performed by the first node or the second node is performed.

Based on a same technical concept, an embodiment of this application further provides a ranging system, including the first node or the second node.

Based on a same technical concept, an embodiment of this application further provides a terminal device, which is the first node or the second node described above, or is located on the first node or the second node described above. The terminal device may be a vehicle, an uncrewed aerial vehicle, a helicopter, an airplane, a ship, an intelligent transportation device, a smart home device, or the like. A specific form of the terminal device is not limited in embodiments of this application.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B each may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowchart diagrams and/or block diagrams of the method, the device (system), and the computer program product according to this application. It should be understood that computer program instructions may be used to implement each procedure and/or each block in the flowchart diagrams and/or the block diagrams and a combination of a procedure and/or a block in the flowchart diagrams and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowchart diagrams and/or in one or more blocks in the block diagrams.

These computer program instructions may be stored in a computer-readable memory that can indicate the computer or any other programmable data processing device to operate in a specific manner, so that the instructions stored in the computer-readable memory generate an artifact that includes an instruction apparatus. The instruction apparatus implements a specific function in one or more procedures in the flowchart diagrams and/or in one or more blocks in the block diagrams.

**Claims**

1. A ranging method, comprising:

   receiving, by a first node, a first ranging frame on at least one channel, and measuring, by the first node, the first ranging frame to obtain first measurement information; and
   sending, by the first node, second measurement information based on the first measurement information and a first feedback manner.

2. The method according to claim 1, wherein

   the first ranging frame comprises at least one symbol; and
   the first measurement information indicates channel state information of at least one valid subcarrier corresponding to the at least one symbol.

3. The method according to claim 2, wherein the first feedback manner indicates feedback of channel state information of all valid subcarriers, and the second measurement information and the first measurement information indicate the same channel state information.

4. The method according to claim 2, wherein the first feedback manner indicates feedback of channel state information of a direct current DC subcarrier, the second measurement information comprises channel state information of a DC subcarrier corresponding to the at least one symbol, and the channel state information of the DC subcarrier is determined by performing interpolation based on channel state information of valid subcarriers adjacent to the DC subcarrier.

5. The method according to claim 4, wherein the interpolation comprises at least one of linear interpolation, nearest neighbor interpolation, cubic spline interpolation, and/or quadratic interpolation.

6. The method according to claim 2, wherein the first feedback manner indicates feedback of channel state information of at least one subcarrier group, the at least one valid subcarrier corresponding to the at least one symbol belongs to the at least one subcarrier group, and the second measurement information comprises channel state information of each subcarrier group in the at least one subcarrier group.

7. The method according to claim 6, wherein every M consecutive subcarriers corresponding to the at least one symbol are one subcarrier group, and M is a positive integer; or
every P or L consecutive subcarriers corresponding to the at least one symbol are one subcarrier group, P and L are positive integers, and P≠L.

8. The method according to claim 6, wherein the at least one channel comprises a first channel and a second channel; and
every Q consecutive subcarriers in subcarriers corresponding to the first channel are one subcarrier group, every N consecutive subcarriers in subcarriers corresponding to the second channel are one subcarrier group, Q and N are positive integers, and Q≠N.

9. The method according to any one of claims 6 to 8, wherein the channel state information of each subcarrier group is an average value, a median value, a maximum value, or a minimum value of channel state information of all valid subcarriers in the subcarrier group, or channel state information of one subcarrier in the subcarrier group.

10. The method according to any one of claims 6 to 9, wherein a quantity of subcarriers comprised in a subcarrier group is related to a ranging range.

11. The method according to any one of claims 1 to 10, wherein

a symbol in the first ranging frame has a cyclic prefix CP, and the measuring, by the first node, the first ranging frame comprises: performing, by the first node, measurement starting from a first symbol in the first ranging frame; or
a symbol in the first ranging frame does not have a CP; and the measuring, by the first node, the first ranging frame comprises: performing, by the first node, measurement starting from a second symbol in the first ranging frame; or performing, by the first node based on indication information or preset setting, measurement starting from a specified symbol in the first ranging frame.

12. The method according to any one of claims 1 to 11, wherein the first ranging frame comprises a plurality of symbols, and the measuring, by the first node, the first ranging frame comprises:

determining, by the first node based on channel state information corresponding to the plurality of symbols, channel state information corresponding to an $R^{th}$ symbol in the first ranging frame, wherein R is a positive integer, and the first measurement information indicates the channel state information corresponding to the $R^{th}$ symbol; or
determining, by the first node based on channel state information corresponding to the plurality of symbols, an average value of the channel state information corresponding to the plurality of symbols, wherein the first measurement information indicates the average value of the channel state information corresponding to the plurality of symbols.

13. The method according to any one of claims 1 to 12, wherein

the symbol in the first ranging frame uses a resource of an overhead symbol in a first-type radio frame, the first-type radio frame comprises a data symbol and the overhead symbol, and the at least one channel is an initial carrier channel; or
the symbol in the first ranging frame uses resources of both a data symbol and an overhead symbol in a first-type radio frame, the first-type radio frame comprises the data symbol and the overhead symbol, and the at least one channel is an initial carrier channel; or

the symbol in the first ranging frame uses a data symbol in a second-type radio frame, all symbols in the second-type radio frame are data symbols, and the at least one channel is an initial carrier channel or a channel after frequency hopping.

14. The method according to any one of claims 1 to 13, further comprising: sending or receiving, by the first node, one or more types of the following information:

first indication information indicating a type of the first ranging frame;
second indication information indicating that the first ranging frame has the CP or does not have the CP;
third indication information indicating that the first ranging frame has a normal CP or an extended CP;
fourth indication information indicating that the first node feeds back channel state information of the at least one channel and/or channel number information of the at least one channel;
fifth indication information indicating a measurement start position in the first ranging frame;
sixth indication information indicating that the first node feeds back the channel state information corresponding to the $R^{th}$ symbol in the first ranging frame, wherein R is a positive integer;
seventh indication information indicating that the first node feeds back the average value of the channel state information corresponding to the plurality of symbols in the first ranging frame; and
eighth indication information indicating the first feedback manner in which the first node feeds back channel state information, wherein the first feedback manner is feeding back the channel state information of the at least one subcarrier group, or feeding back the channel state information of the DC subcarrier, or feeding back the channel state information of all the valid subcarriers.

15. The method according to claim 14, wherein when the first feedback manner is feeding back the channel state information of the at least one subcarrier group, the first node further sends or receives one or more of the following information:

ninth indication information indicating a grouping parameter of the at least one subcarrier group; and
tenth indication information indicating a calculation manner of the channel state information of the at least one subcarrier group.

16. The method according to any one of claims 1 to 15, wherein the method further comprises:

calibrating the first measurement information based on calibration information, to obtain calibrated first measurement information, wherein the calibration information is determined based on the at least one channel; and
the sending, by the first node, second measurement information based on the first measurement information and a first feedback manner comprises:
sending, by the first node, the second measurement information based on the calibrated first measurement information and the first feedback manner.

17. The method according to any one of claims 1 to 16, wherein the method further comprises:
sending, by the first node, a second ranging frame on the at least one channel, wherein the second ranging frame is used by the second node to perform measurement to obtain third measurement information.

18. The method according to any one of claims 1 to 17, wherein the at least one channel belongs to a first channel group, and the method further comprises:

receiving, by the first node, a third ranging frame on a second channel group, and measuring, by the first node, the third ranging frame to obtain fourth measurement information, wherein the second channel group comprises one or more channels, and the second channel group has at least one channel different from the first channel group; and
sending, by the first node, fifth measurement information based on the fourth measurement information and the first feedback manner.

19. The method according to claim 18, wherein the method comprises:
sending, by the first node, the second measurement information and the fifth measurement information on at least one initial carrier channel.

20. The method according to claim 12, wherein a value of R is preset or predefined.

21. The method according to any one of claims 1 to 20, wherein the channel state information comprises a relative value of a relative reference power level RPL; and
the method further comprises:
sending, by the first node, the RPL.

22. The method according to any one of claims 1 to 21, further comprising:
sending, by the first node, a signal-to-noise ratio SNR of the at least one channel.

23. A ranging method, comprising:

sending, by a second node on at least one channel, a first ranging frame for ranging; and
receiving, by the second node, second measurement information from the first node, wherein the second measurement information corresponds to the first ranging frame and a first feedback manner, the second measurement information is used to determine a ranging result, and the ranging result comprises a distance between the first node and the second node.

24. The method according to claim 23, wherein the method further comprises:

receiving, by the second node, a second ranging frame on the at least one channel, and measuring the second ranging frame to obtain third measurement information; and
determining, by the second node, the ranging result based on the second measurement information and the third measurement information.

25. The method according to claim 23 or 24, wherein the at least one channel belongs to a first channel group, and the method further comprises:

sending, by the second node on a second channel group, a third ranging frame for ranging, wherein the second channel group comprises one or more channels, and the second channel group has at least one channel different from the first channel group; and
receiving, by the second node, fifth measurement information from the first node, wherein the fifth measurement information corresponds to the third ranging frame and the first feedback manner.

26. The method according to claim 25, wherein the method comprises:
receiving, by the second node, the second measurement information and the fifth measurement information on at least one initial carrier channel.

27. The method according to any one of claims 23 to 26, wherein the method further comprises:
receiving, by the second node, an SNR of the at least one channel.

28. A ranging apparatus, comprising:

a receiving module, configured to receive a first ranging frame on at least one channel;
a processing module, configured to measure the first ranging frame to obtain first measurement information; and
a sending module, configured to send second measurement information based on the first measurement information and a first feedback manner.

29. A ranging apparatus, comprising:

a sending module, configured to send, on at least one channel, a first ranging frame for ranging; and
a receiving module, configured to receive second measurement information from the first node, wherein the second measurement information corresponds to the first measurement information and a first feedback manner, the second measurement information is used to determine a ranging result, and the ranging result comprises a distance between the first node and a node on which the ranging apparatus is located.

30. A ranging apparatus, comprising at least one processor and an interface circuit, wherein
the interface circuit is configured to: receive a signal from an apparatus other than the apparatus, and send the signal to the processor, or receive a signal from the processor, and send the signal to an apparatus other than the apparatus; and the processor is configured to implement, through a logic circuit or by executing a code instruction, the method according to any one of claims 1 to 22, or the method according to any one of claims 23 to 27.

31. A computer-readable storage medium, wherein the storage medium stores a computer program or instructions, and when the computer program or instructions are executed by a communication apparatus, the method according to any one of claims 1 to 22 or the method according to any one of claims 23 to 27 is implemented.

32. A computer program product, wherein the computer program product stores instructions, and when the instructions are run on a computer, the computer is enabled to perform the method according to any one of claims 1 to 22, or perform the method according to any one of claims 23 to 27.

33. A ranging system, comprising:

a first node, configured to perform the method according to any one of claims 1 to 22; and
a second node, configured to perform the method according to any one of claims 23 to 27.

FIG. 1

Second node                                      First node

S201: The second node sends a first ranging frame on
at least one channel, and the first node receives the
first ranging frame on the at least one channel

S202: The first node measures the first ranging
frame to obtain first measurement information

S203: The first node sends second measurement
information based on the first measurement
information and a first feedback manner, and the
second node receives the second measurement
information from the first node

FIG. 2

FIG. 3

System overheads
(N1+1 SGs)

Ranging frame from a G node
(L SGs)

Ranging frame from a T node
(L STs)

| SG # 0 | ... | SG # N1 | SG # (N1+1) | ... | SG # N2 | ST # (N2+1) | ... | ST # N3 | ... |

t

Superframe

Ranging interaction

FIG. 4

EP 4 585 966 A1

EP 4 585 966 A1

A pair of ranging symbols in a radio frame from a G node
(2 SGs)

| SG # (N1+1) | SG # N1+2 | | SG # (N1+3) | SG # (N1+4) | ... | SG # (N2–1) | SG # (N2) |

t

Ranging frame from the G node

FIG. 5

Ranging interaction

| G | G | G | G | G | G | G | G | G | GAP | T | T | T | T | T | T | T | T | T | GAP |

Second-type radio frame (or ranging frame) from a G node      Second-type radio frame (or ranging frame) from a T node

FIG. 6

FIG. 7

EP 4 585 966 A1

Measurement start symbol    Measurement start symbol

| | X SFs | | | | Radio frame 1 | | Radio frame 2 |

| G node | PLL lock phase (100 μs to 3 ms) | CCA (25 μs to 3 ms) | Preamble | PRS (DL, 20.83 μs) | GAP | Receiving status |

$T_{RF}$    $T_{LBT}$

Radio frame 1    Radio frame 2

| T node | PLL lock phase (100 μs to 3 ms) | CCA (25 μs to 3 ms) | Receiving status | Receiving status | GAP | PRS (UL, 20.83 μs) |

Switching duration T0    Ranging interaction

FIG. 8

EP 4 585 966 A1

System overheads (N1+1 SG)

Feed back a first CSI-RS

Ranging frame from a G node (L SGs)

Feed back a first SRS

Ranging frame from a T node (L STs)

| SG # 0 | ... | SG # N1 | SG # (N1+1) | ... | SG # N2 | ST # (N2+1) | ... | ST # N3 | ... |

Superframe

Ranging interaction

t

FIG. 9

Feed back a second symbol
(FTS/STS)

Feed back a second symbol
(FTS/STS)

Ranging interaction

| G | G | G | G | G | G | G | G | G | GAP | T | T | T | T | T | T | T | T | T | GAP |

Ranging frame 3 from a G node

Ranging frame 3 from a T node

FIG. 10

FIG. 11

FIG. 12

FIG. 13

## INTERNATIONAL SEARCH REPORT

| International application No. |
|---|
| **PCT/CN2022/123357** |

**A. CLASSIFICATION OF SUBJECT MATTER**

G01S13/08(2006.01)i; H04W64/00(2009.01)i

According to International Patent Classification (IPC) or to both national classification and IPC

**B. FIELDS SEARCHED**

Minimum documentation searched (classification system followed by classification symbols)

IPC: G01S,H04W

Documentation searched other than minimum documentation to the extent that such documents are included in the fields searched

Electronic data base consulted during the international search (name of data base and, where practicable, search terms used)

CNTXT, VEN, ENTXTC, CJFD: 华为, 李德建, 程型清, 高磊, 测距, 无线, 信道, 状态信息, 估计信息, 反馈, 跳频, 信道组, 超帧, 子载波, 直流, 插值, 子载波组, 载波信道, 开销符号, ranging, range finding, wireless, CSI, channel, feedback, frequency hopping, FH, subcarrier+, DC, interpolation, OFDM

**C. DOCUMENTS CONSIDERED TO BE RELEVANT**

| Category* | Citation of document, with indication, where appropriate, of the relevant passages | Relevant to claim No. |
|---|---|---|
| X | US 2019293780 A1 (INTEL CORPORATION) 26 September 2019 (2019-09-26) claims 1-25, description, paragraphs [0039]-[0215], and figures 1-4 | 1, 2, 4, 5, 11-17, 20-24, 27-33 |
| Y | US 2019293780 A1 (INTEL CORPORATION) 26 September 2019 (2019-09-26) claims 1-25, description, paragraphs [0039]-[0215], and figures 1-4 | 3, 6, 7, 9, 10, 18, 19, 25, 26 |
| Y | US 2013094392 A1 (LG ELECTRONICS INC.) 18 April 2013 (2013-04-18) description, paragraphs [0058]-[0089] | 3, 6, 7, 9, 10 |
| Y | US 2017257885 A1 (QUALCOMM INC.) 07 September 2017 (2017-09-07) description, paragraph [0035] | 18, 19, 25, 26 |
| X | CN 114696877 A (HUAWEI TECHNOLOGIES CO., LTD.) 01 July 2022 (2022-07-01) description, paragraphs [0089]-[0102] and [0118]-[0119], and figure 5 | 1, 2, 4, 5, 11-17, 20-24, 27-33 |
| X | WO 2018101979 A2 (INTEL IP CORPORATION) 07 June 2018 (2018-06-07) description, paragraphs [0032]-[0160], and figure 1 and 2 | 1, 2, 4, 5, 11-17, 20-24, 27-33 |
| A | CN 109462886 A (MINZU UNIVERSITY OF CHINA et al.) 12 March 2019 (2019-03-12) entire document | 1-33 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 June 2023** | **25 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 585 966 A1**

## INTERNATIONAL SEARCH REPORT

| International application No. |
|---|
| **PCT/CN2022/123357** |

**C.    DOCUMENTS CONSIDERED TO BE RELEVANT**

| Category* | Citation of document, with indication, where appropriate, of the relevant passages | Relevant to claim No. |
|---|---|---|
| A | CN 111698180 A (BEIJING XIAOMI SONGGUO ELECTRONICS CO., LTD.) 22 September 2020 (2020-09-22) <br> entire document | 1-33 |
| A | CN 112995081 A (HUAWEI TECHNOLOGIES CO., LTD.) 18 June 2021 (2021-06-18) <br> entire document | 1-33 |
| A | US 2015372795 A1 (MEDIATEK SINGAPORE PTE. LTD.) 24 December 2015 (2015-12-24) <br> entire document | 1-33 |

Form PCT/ISA/210 (second sheet) (July 2022)

40

### INTERNATIONAL SEARCH REPORT
**Information on patent family members**

International application No.

**PCT/CN2022/123357**

| Patent document cited in search report | | | Publication date (day/month/year) | Patent family member(s) | | | Publication date (day/month/year) |
|---|---|---|---|---|---|---|---|
| US | 2019293780 | A1 | 26 September 2019 | US | 11105915 | B2 | 31 August 2021 |
| US | 2013094392 | A1 | 18 April 2013 | EP | 2584825 | A2 | 24 April 2013 |
| | | | | EP | 2584825 | B1 | 06 March 2019 |
| | | | | US | 9826425 | B2 | 21 November 2017 |
| | | | | WO | 2011162522 | A2 | 29 December 2011 |
| | | | | WO | 2011162522 | A9 | 12 April 2012 |
| US | 2017257885 | A1 | 07 September 2017 | WO | 2017151279 | A1 | 08 September 2017 |
| CN | 114696877 | A | 01 July 2022 | WO | 2022143475 | A1 | 07 July 2022 |
| WO | 2018101979 | A2 | 07 June 2018 | DE | 112017006078 | T5 | 14 August 2019 |
| CN | 109462886 | A | 12 March 2019 | None | | | |
| CN | 111698180 | A | 22 September 2020 | None | | | |
| CN | 112995081 | A | 18 June 2021 | WO | 2021115217 | A1 | 17 June 2021 |
| | | | | US | 2022299629 | A1 | 22 September 2022 |
| US | 2015372795 | A1 | 24 December 2015 | WO | 2015195050 | A1 | 23 December 2015 |
| | | | | EP | 3146689 | A1 | 29 March 2017 |
| | | | | EP | 3146689 | B1 | 06 March 2019 |

Form PCT/ISA/210 (patent family annex) (July 2022)